# EUROPÄISCHE PATENTANMELDUNG

(11) **EP 4 814 448 A1**
(43) Veröffentlichungstag der Anmeldung: **30.09.2026**
(21) Anmeldenummer: 26160838.4
(22) Anmeldetag: 26.02.2026
(51) Int. Cl.: G01G 19/02, G01M 5/00

(54) **VERFAHREN UND VORRICHTUNG ZUR ERMITTLUNG DES ZUSTANDES EINER BRÜCKE**

(30) Priorität: 27.03.2025 EP 25166755
(71) Anmelder: Kistler Holding AG, 8408 Winterthur (CH)
(72) Erfinder: Cornu, David, 8500 Frauenfeld (CH); Wuhrmann, Thomas, 8500 Frauenfeld (CH)

(57) **Zusammenfassung**

Die Erfindung betrifft Verfahren zur Ermittlung des Zustandes einer Brücke (B); mit mindestens einem Verkehrssensor (1 - 1") zur Erfassung der Last von über die Brücke (B) fahrenden Fahrzeugen (C, C'), von welchem Verkehrssensor (1 - 1'') für die erfasste Last Lastdaten (LD1 - LD3) erzeugt werden; und mit einer Auswerteeinheit (10) zur Auswertung der Lastdaten (LD1 - LD3); wobei mindestens ein Struktursensor (2 - 2‴) zur Erfassung einer Strukturantwort der Brücke (B) bereitgestellt wird, welche Strukturantwort mindestens eine der folgenden physikalischen Grössen umfasst: eine Vibration, eine Dehnung, eine Verschiebung oder eine Neigungsänderung, von welchem Struktursensor (2 - 2‴) für die erfasste Strukturantwort Strukturdaten (SD1 - SD4) erzeugt werden; und wobei die Auswerteeinheit (10) eingerichtet ist, die Lastdaten (LD1 - LD3) und die Strukturdaten (SD1 - SD4) zu einem Zustandsprofil (P) der Brücke (B) zu verknüpfen, welches Zustandsprofil (P) die zeitliche Entwicklung der Last der Fahrzeuge (C, C') und der Strukturantwort der Brücke (B) darstellt.

## Beschreibung

### Technisches Gebiet

Die Erfindung betrifft ein Verfahren und eine Vorrichtung zur Ermittlung des Zustandes einer Brücke gemäss den Oberbegriffen der unabhängigen Ansprüche.

### Stand der Technik

Mit Structural Health Monitoring (SHM) wird das kontinuierliche oder periodische und automatisierte Verfahrene zur Ermittlung des Zustandes einer Infrastruktur wie eine Brücke bezeichnet. Dies erfolgt mit einer permanent installierten Einrichtung von Messdaten und durch Analyse der Messdaten. So sollen Schädigungen wie Risse oder Verformungen der Infrastruktur frühzeitig erkannt werden, um Gegenmassnahmen einzuleiten.

Das Dokument WO14089591A1 beschreibt solch ein SHM einer Brücke unter Verwendung eines Verkehrssensors zur Erfassung des Verkehrs über die Brücke. Der Verkehrssensor ist als Weigh-In-Motion (WIM) Sensor gestaltet, welcher die Last von über die Brücke fahrenden Fahrzeugen erfasst. Der WIM Sensor ist im Fundament der Brücke angeordnet und misst die Strukturantwort der Brücke unter der Last der Fahrzeuge. Dafür erzeugt der WIM Sensor Messdaten. Die Messdaten werden vom WIM Sensor zur Auswertung an eine Auswerteeinheit übermittelt. So ermittelt die Auswerteeinheit aus dem zeitlichen Verlauf der Messdaten die Anzahl der Radachsen jedes der Fahrzeuge oder überwacht die Messdaten auf das Überschreiten eines vordefinierten Schwellwerts hin.

Nun können Zweifel aufkommen, ob die vom WIM Sensor erzeugten Messdaten tatsächlich vom Verkehr über die Brücke stammen, oder ob sie eine andere Ursache, wie eine Schädigung der Brücke oder ein Erdbeben im Gebiet der Brücke haben.

Aufgabe der vorliegenden Erfindung ist es, das aus dem Dokument WO14089591A1 bekannte Verfahren zur Ermittlung des Zustandes einer Brücke zu verbessern. Insbesondere soll Gewissheit geschaffen werden, ob die Strukturantwort der Brücke tatsächlich vom Verkehr über die Brücke stammt.

### Darstellung der Erfindung

Diese Aufgabe wird durch die Merkmale der unabhängigen Ansprüche gelöst.

Die Erfindung betrifft ein Verfahren zur Ermittlung des Zustandes einer Brücke; mit mindestens einem Verkehrssensor zur Erfassung der Last von über die Brücke fahrenden Fahrzeugen, von welchem Verkehrssensor für die erfasste Last Lastdaten erzeugt werden; und mit einer Auswerteeinheit zur Auswertung der Lastdaten; wobei mindestens ein Struktursensor zur Erfassung einer Strukturantwort der Brücke bereitgestellt wird, welche Strukturantwort mindestens eine der folgenden physikalischen Grössen umfasst: eine Vibration, eine Dehnung, eine Verschiebung oder eine Neigungsänderung, von welchem Struktursensor für die erfasste Strukturantwort Strukturdaten erzeugt werden; und wobei die Auswerteeinheit eingerichtet ist, die Lastdaten und die Strukturdaten zu einem Zustandsprofil der Brücke zu verknüpfen, welches Zustandsprofil die zeitliche Entwicklung der Last der Fahrzeuge und der Strukturantwort der Brücke darstellt.

Die Erfindung betrifft auch eine Vorrichtung zur Ermittlung der Beanspruchung einer Brücke; mit mindestens einem Verkehrssensor zur Erfassung der Last von über die Brücke fahrenden Fahrzeugen, welcher Verkehrssensor für die erfasste Last Lastdaten erzeugt; und mit einer Auswerteeinheit zur Auswertung der Lastdaten; wobei die Vorrichtung mindestens einen Struktursensor zur Erfassung einer Strukturantwort der Brücke aufweist, welche Strukturantwort mindestens eine der folgenden physikalischen Grössen umfasst: eine Vibration, eine Dehnung, eine Verschiebung oder eine Neigungsänderung, welcher Struktursensor für die erfasste Strukturantwort Strukturdaten erzeugt; und wobei die Auswerteeinheit eingerichtet ist, die Lastdaten und die Strukturdaten zu einem Zustandsprofil der Brücke zu verknüpfen, welches Zustandsprofil die zeitliche Entwicklung der Last der Fahrzeuge und der Strukturantwort der Brücke darstellt.

Erfindungsgemäss erfolgt die Erfassung der Last der über die Brücke fahrenden Fahrzeuge räumlich separat von der Erfassung der Strukturantwort der Brücke. Durch Verknüpfung der räumlich separat erfassten Lastdaten und Strukturdaten lässt sich eine Ursache-Wirkung-Beziehung zwischen der zeitlichen Entwicklung der Last der Fahrzeuge auf der Brücke und der Strukturantwort der Brücke bilden. Erst diese Ursache-Wirkung-Beziehung schafft Gewissheit, dass die Strukturantwort der Brücke tatsächlich vom Verkehr über die Brücke stammt und nicht ihre Ursache in einer Schädigung der Brücke oder einem Erdbeben im Gebiet der Brücke hat.

Vorteilhafte Weiterbildungen der Erfindung sind in den abhängigen Ansprüchen geschützt.

### Kurze Beschreibung der Zeichnungen

Im Folgenden wird die Erfindung beispielhaft unter Beizug der Figuren näher erklärt. Es zeigen
- Fig. 1: eine Ansicht eines Teils einer ersten Ausführungsform einer Brücke B und eine schematische Darstellung eines Teils einer ersten Ausführungsform einer Vorrichtung D zur Ermittlung eines Zustandsprofils P der Brücke B zu einem Zeitpunkt t2;
- Fig. 2: eine Draufsicht eines Teils der ersten Ausführungsform der Brücke B gemäss Fig. 1 mit einem Teil der ersten Ausführungsform der Vorrichtung D zur Ermittlung eines Zustandsprofils P der Brücke B zu einem Zeitpunkt t3;
- Fig. 3: eine Ansicht eines Teils einer zweiten Ausführungsform einer Brücke B und eine schematische Darstellung eines Teils einer zweiten Ausführungsform einer Vorrichtung D zur Ermittlung eines Zustandsprofils P der Brücke B zu einem Zeitpunkt t1;
- Fig. 4: eine Draufsicht eines Teils der zweiten Ausführungsform der Brücke B gemäss Fig. 3 mit einem Teil der zweiten Ausführungsform der Vorrichtung D zur Ermittlung eines Zustandsprofils P der Brücke B zu einem Zeitpunkt t3;
- Fig. 5: eine schematische Darstellung eines Beispiels eines Zustandsprofils P der ersten Ausführungsform der Brücke B gemäss Fig. 1 und 2 zu Zeitpunkten t1 - t4; und
- Fig. 6: eine schematische Darstellung eines Beispiels eines Zustandsprofils P der zweiten Ausführungsform der Brücke B gemäss Fig. 3 und 4 zu Zeitpunkten t1 - t4.

Gleiche Bezugszeichen bezeichnen in den Figuren gleiche Gegenstände.
**Wege zur Ausführung der Erfindung**

### DIE BRÜCKE B

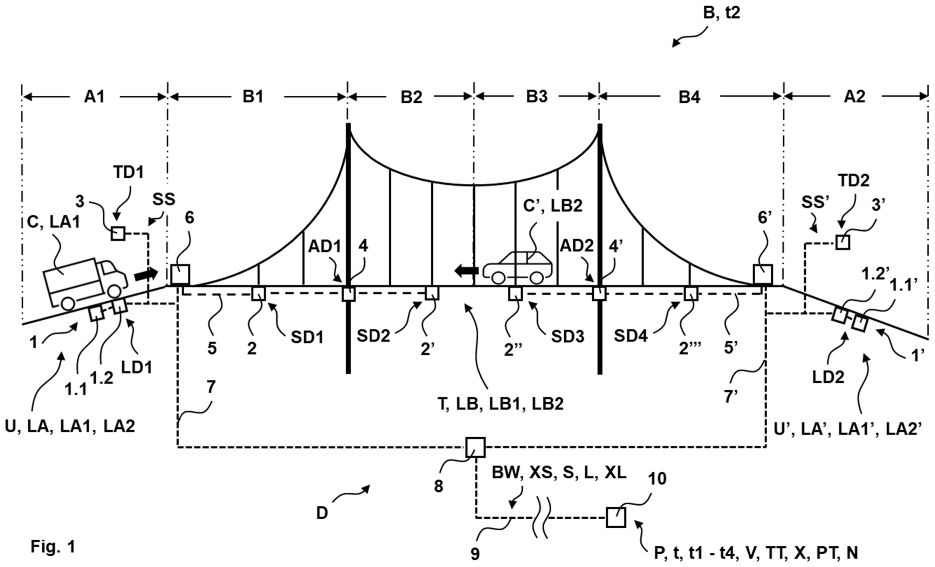

Die Fig. 1 bis 4 zeigen schematisch Teile von zwei Ausführungsformen einer Brücke B. Die Brücke B hat die Funktion, Fahrzeugen C, C' die Überquerung eines Hindernisses zu ermöglichen. Dazu fahren die Fahrzeuge C, C' über die Brücke B.

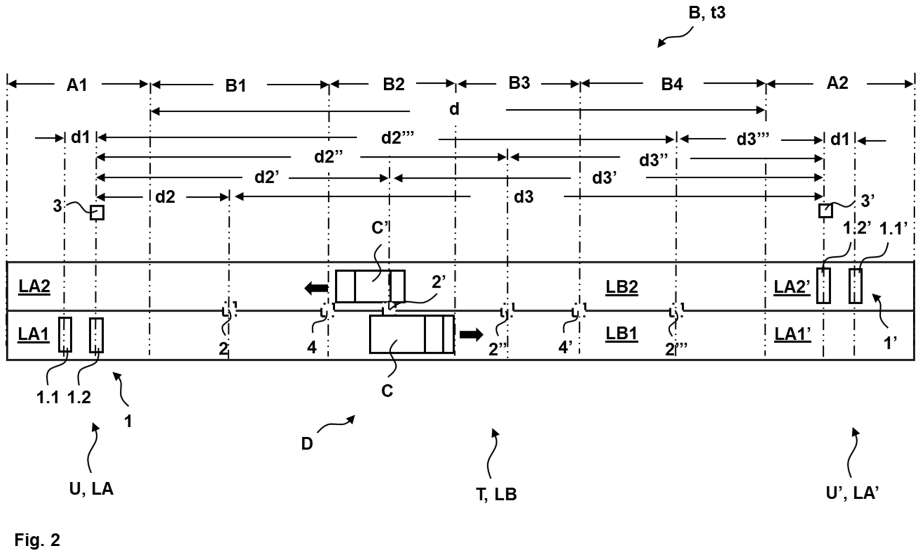

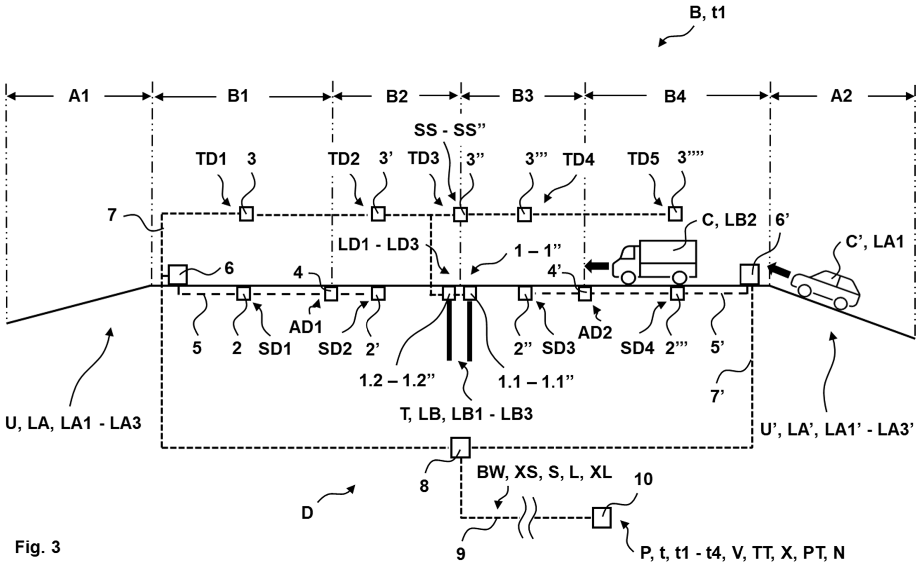

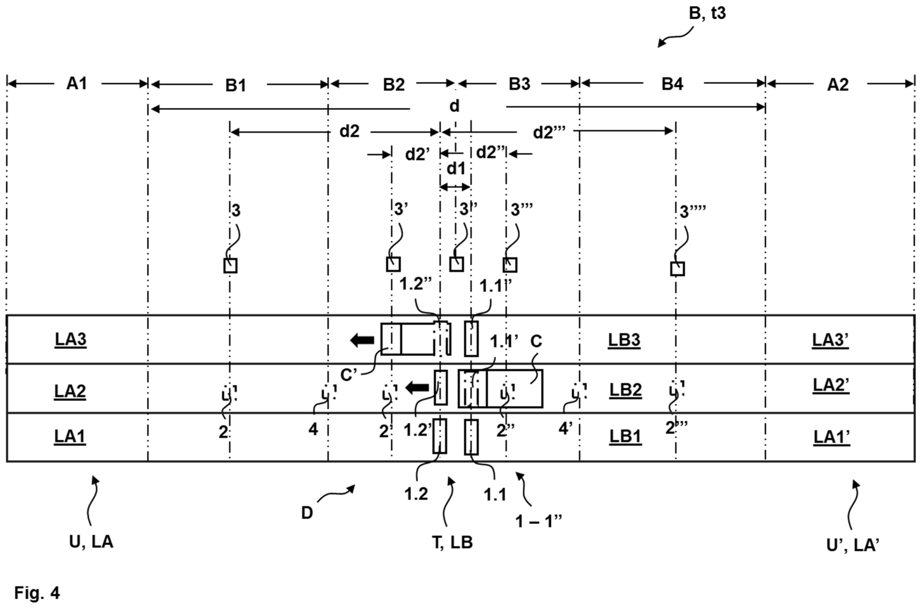

Die Brücke B weist eine Struktur T und mindestens eine Fahrbahn LB für die Fahrzeuge C', C' auf. Die Struktur T besteht aus bewährten Materialien wie Eisen, Stahl, Beton, Backstein, Holz, usw. In der ersten Ausführungsform der Brücke B gemäss Fig. 1 und 2 ist die Brücke B eine Hängebrücke und die Struktur T besteht vorwiegend aus gespannten Stahlseilen und Stahlträgern. In der zweiten Ausführungsform der Brücke B gemäss Fig. 3 und 4 ist die Brücke B eine Spannbetonbrücke und die Struktur T besteht vorwiegend aus Betonplatten und Betonträgern.

In den Beispielen gemäss Fig. 1 bis 4 umfassen die Fahrzeuge C, C' ein erstes Fahrzeug C und ein zweites Fahrzeug C'. Das erste Fahrzeug C ist ein Lastwagen mit einer Last von 10000 kg, das zweite Fahrzeug C' ist ein Personenwagen mit einer Last von 2000 kg. Selbstverständlich kann der Fachmann die Erfindung mit mehr als zwei Fahrzeugen realisieren.

Vorzugsweise weist die Fahrbahn LB der Brücke B mehrere Fahrspuren LB1 - LB3 auf. In der ersten Ausführungsform der Brücke B gemäss Fig. 1 und 2 umfassen die Fahrspuren LB1 - LB3 eine erste Fahrspur LB1 für die Fahrt der Fahrzeuge C, C' in einer ersten Fahrtrichtung von links nach rechts und eine zweite Fahrspur LB2 für die Fahrt der Fahrzeuge C, C' in einer zweiten Fahrtrichtung von rechts nach links. In der zweiten Ausführungsform der Brücke B gemäss Fig. 3 und 4 umfassen die Fahrspuren LB1 - LB3 eine erste Fahrspur LB1, eine zweite Fahrspur LB2 und eine dritte Fahrspur LB3. In allen drei Fahrspuren LB1 - LB3 fahren die Fahrzeuge C, C' in der zweiten Fahrtrichtung von rechts nach links. Die Fahrtrichtung der Fahrzeuge C, C' ist durch fette Pfeile gekennzeichnet.

Die Brücke B weist mehrere Brückenabschnitte B1 - B4 auf, welche Brückenabschnitte B1 - B4 einen ersten Brückenabschnitt B1, einen zweiten Brückenabschnitt B2, einen dritten Brückenabschnitt B3 und einen vierten Brückenabschnitt B4 umfassen. Die Brückenabschnitte B1 - B4 grenzen aneinander an. In den beiden Ausführungsformen der Brücke B gemäss Fig. 1 bis 4 grenzt der erste Brückenabschnitt B1 linksseitig an den zweiten Brückenabschnitt B2, der zweite Brückenabschnitt B2 grenzt linksseitig an den dritten Brückenabschnitt B3 und der dritte Brückenabschnitt B3 grenzt linksseitig an den vierten Brückenabschnitt B4. Selbstverständlich kann der Fachmann die Erfindung mit einer anderen Anzahl als vier Brückenabschnitten realisieren.

### DIE ZUFAHRTEN A1, A2

Die Fig. 1 bis 4 zeigen schematisch zwei Ausführungsform von Zufahrten A1, A2 zur Brücke B. Die Zufahrten A1, A2 sind ausserhalb der Brücke B und somit nicht Bestandteil der Brücke B auf einem Untergrund U, U' angeordnet. Der Untergrund U, U' besteht aus bewährten Materialien wie Erde, Beton, usw. Die Zufahrten A1, A2 umfassen eine erste Zufahrt A1 auf einem ersten Untergrund U und eine zweite Zufahrt A2 auf einem zweiten Untergrund U'. Die erste Zufahrt A1 grenzt linksseitig an den ersten Brückenabschnitt B1 und die zweite Zufahrt A2 grenzt rechtsseitig an den vierten Brückenabschnitt B4. Selbstverständlich kann der Fachmann die Erfindung mit einer anderen Anzahl als zwei Zufahrten realisieren.

Die Zufahrten A1, A2 sind als Rampen mit einer Fahrbahn LA, LA' für die Fahrzeuge C, C' ausgestaltet. In der Ausführungsform der Zufahrten A1, A2 gemäss Fig. 1 und 2 weist die erste Zufahrt A1 eine erste Fahrbahn LA auf und die zweite Zufahrt A2 weist eine zweite Fahrbahn LA' auf. Vorzugsweise weist jede Fahrbahn LA, LA' mehrere Fahrspuren LA1 - LA3, LA1 - LA3' auf. In der ersten Ausführungsform der Zufahrten A1, A2 gemäss Fig. 1 und 2 umfassen die Fahrspuren LA1 - LA3 der ersten Fahrbahn LA eine erste Fahrspur LA1 für die Fahrt der Fahrzeuge C, C' in der ersten Fahrtrichtung und eine zweite Fahrspur LA2 für die Fahrt der Fahrzeuge C, C' in der zweiten Fahrtrichtung. Die Fahrspuren LA1 - LA3 der zweite Fahrbahn LA' umfassen eine erste Fahrspur LA1' für die Fahrt der Fahrzeuge C, C' in der ersten Fahrtrichtung und eine zweite Fahrspur LA2' für die Fahrt der Fahrzeuge C, C' in der zweiten Fahrtrichtung. In der zweiten Ausführungsform der Zufahrten A1, A2 gemäss Fig. 3 und 4 umfassen die Fahrspuren LA1 - LA3 der ersten Fahrbahn LA eine erste Fahrspur LA1, eine zweite Fahrspur LA2 und eine dritte Fahrspur LA3. Die Fahrspuren LA1' - LA3' der zweiten Fahrbahn LA' umfassen eine erste Fahrspur LA1', eine zweite Fahrspur LA2' und eine dritte Fahrspur LA3'. In allen drei Fahrspuren LA1 - LA3, LA1' - LA3' der beiden Fahrbahnen LA, LA' fahren die Fahrzeuge C, C' in der zweiten Fahrtrichtung von rechts nach links.

Die Fahrt der Fahrzeuge C, C' über die Zufahrten A1, A2 und die Brücke B findet zu Zeitpunkten t1 - t4 statt. Die Zeitpunkte t1 - t4 umfassen einen ersten Zeitpunkt t1, einen zweiten Zeitpunkt t2, einen dritten Zeitpunkt t3 und einen vierten Zeitpunkt t4. Die Zeitpunkte t1 - t4 finden zeitlich nacheinander statt. Der zweite Zeitpunkt t2 findet nach dem ersten Zeitpunkt t1 statt, der dritte Zeitpunkt t3 findet nach dem zweiten Zeitpunkt t2 statt und der vierte Zeitpunkt t4 findet nach dem dritten Zeitpunkt t3 statt.

In der ersten Ausführungsform der Zufahrten A1, A2 und der Brücke B gemäss Fig. 1 und 2 fährt das erste Fahrzeug C zum zweiten Zeitpunkt t2 auf der ersten Fahrspur LA1 der ersten Zufahrt A1 in der ersten Fahrtrichtung zur Brücke B, während das zweite Fahrzeug C' zum zweiten Zeitpunkt t2 auf der zweiten Fahrspur LB2 im dritten Brückenabschnitt B3 der Brücke B in der zweiten Fahrtrichtung fährt. Zum dritten Zeitpunkt t3 kreuzen sich die beiden Fahrzeuge C, C' im zweiten Brückenabschnitt B2 der Brücke B.

In der zweiten Ausführungsform der Zufahrten A1, A2 und der Brücke B gemäss Fig. 3 und 4 fährt das erste Fahrzeug C zum ersten Zeitpunkt t1 auf der zweiten Fahrspur LB2 im vierten Brückenabschnitt B4 der Brücke B in der zweiten Fahrtrichtung und das zweite Fahrzeug C' fährt zum ersten Zeitpunkt t1 auf der ersten Fahrspur LA1' der zweiten Zufahrt A2 in der zweiten Fahrtrichtung zur Brücke B. Zum dritten Zeitpunkt t3 überholt das auf der dritten Fahrspur LB3 fahrende zweite Fahrzeug C' das auf der zweiten Fahrspur LB2 fahrende erste Fahrzeug C im Grenzbereich des zweiten und dritten Brückenabschnittes B2, B3 auf der Brücke B.

### DER VERKEHRSSENSOR 1, 1'

Die Vorrichtung D weist mindestens einen Verkehrssensor 1 - 1" auf. Der Verkehrssensor 1 - 1" hat die Funktion, die Last der über die Brücke B fahrenden Fahrzeuge C, C' zu erfassen.

In der ersten Ausführungsform der Vorrichtung D gemäss Fig. 1 und 2 ist der Verkehrssensor 1 - 1" in mindestens einer Fahrbahn LA, LA' der Zufahrten A1, A2 eingebaut. Der Verkehrssensor 1 - 1" umfasst einen ersten Verkehrssensor 1, welcher in der ersten Fahrbahn LA der ersten Zufahrt A1 eingebaut ist und einen zweiten Verkehrssensor 1', welcher in der zweiten Fahrbahn LA' der zweiten Zufahrt A2 eingebaut ist.

In der zweiten Ausführungsform der Vorrichtung D gemäss Fig. 3 und 4 ist der Verkehrssensor 1 - 1" in mindestens einer Fahrbahn LB1 - LB3 der Brücke B eingebaut. Der Verkehrssensor 1 - 1" umfasst einen ersten Verkehrssensor 1, welcher in der ersten Fahrbahn LB1 im Grenzbereich des zweiten und dritten Brückenabschnitts B2, B3 eingebaut ist, einen zweiten Verkehrssensor 1', welcher in der zweiten Fahrbahn LB2 im Grenzbereich des zweiten und dritten Brückenabschnitts B2, B3 eingebaut ist und einen dritten Verkehrssensor 1", welcher in der dritten Fahrbahn LB3 im Grenzbereich des zweiten und dritten Brückenabschnitts B2, B3 eingebaut ist.

Bei Fahrt eines der Fahrzeuge C, C' über den in der Fahrbahn LA, LA' der Zufahrten A1, A2 oder der Fahrbahn LB der Brücke B eingebauten Verkehrssensor 1 - 1" erfasst der Verkehrssensor 1 - 1" die Last dieses Fahrzeugs C, C'.

Vorzugsweise weist der Verkehrssensor 1 - 1" in jeder Fahrspur LA1 - LA3, LA1' - LA3', LB1 - LB3 einen A-Sensor 1.1 - 1.1" und einen B-Sensor 1.2 - 1.2" auf. Der A-Sensor 1.1 - 1.1" und der B-Sensor 1.2 - 1.2" sind in einem ersten Sensorabstand d1 zueinander angeordnet. Der erste Sensorabstand d1 ist bekannt und beträgt typischerweise 1 m. In jeder Fahrspur LA1 - LA3, LA1' - LA3', LB1 - LB3 ist der A-Sensor 1.1 - 1.1" in Fahrtrichtung der Fahrzeuge C, C' vor dem B-Sensor 1.2 - 1.2" angeordnet. Die in einer Fahrspur LA1 - LA3, LA1' - LA3', LB1 - LB3 fahrenden Fahrzeuge C, C' fahren zuerst über den A-Sensor 1.1 - 1.1" und dann über den B-Sensor 1.2 - 1.2". Mit dem ersten Sensorabstand d1 und durch Ermittlung einer Zeitdauer t beim Überfahren des A-Sensors 1.1 - 1.1" und des B-Sensors 1.2 - 1.2" einer Fahrspur LA1 - LA3, LA1' - LA3', LB1 - LB3 lässt sich eine Geschwindigkeit V jedes der Fahrzeuge C, C' ermitteln.

In der ersten Ausführungsform der Vorrichtung D gemäss Fig. 1 und 2 umfasst der erste Verkehrssensor 1 einen ersten A-Sensor 1.1 und einen ersten B-Sensor 1.2 in der erste Fahrspur LA1 der ersten Zufahrt A1 und der zweite Verkehrssensor 1' umfasst einen zweiten A-Sensor 1.1' und einen zweiten B-Sensor 1.2' in der zweiten Fahrspur LA2' der zweiten Zufahrt A2.

In der zweiten Ausführungsform der Vorrichtung D gemäss Fig. 3 und 4 umfasst der erste Verkehrssensor 1 im Grenzbereich des zweiten und dritten Brückenabschnitts B2, B3 einen ersten A-Sensor 1.1 und einen ersten B-Sensor 1.2 in der erste Fahrspur LB1, der zweite Verkehrssensor 1' umfasst einen zweiten A-Sensor 1.1' und einen zweiten B-Sensor 1.2' in der zweiten Fahrspur LB2 und der dritte Verkehrssensor 1" umfasst einen dritten A-Sensor 1.1" und einen dritten B-Sensor 1.2" in der dritten Fahrspur LB3.

Der Verkehrssensor 1 - 1" erzeugt für die erfasste Last Lastdaten LD1 - LD3. Vorzugsweise erzeugt der Verkehrssensor 1 - 1" die Lastdaten LD1 - LD3 mit einer Zeitauflösung von kleiner/gleich 10 msec, vorzugsweise von kleiner/gleich 1 msec, vorzugsweise von kleiner/gleich 1 µsec. In der ersten Ausführungsform der Vorrichtung D gemäss Fig. 1 und 2 erzeugt der erste Verkehrssensor 1 erste Lastdaten LD1 und der zweite Verkehrssensor 1' erzeugt zweite Lastdaten LD2. In der zweiten Ausführungsform der Vorrichtung D gemäss Fig. 3 und 4 erzeugt der erste Verkehrssensor 1 erste Lastdaten LD1, der zweite Verkehrssensor 1' erzeugt zweite Lastdaten LD2 und der dritte Verkehrssensor 1" erzeugt dritte Lastdaten LD3. Die Lastdaten LD1 - LD3 sind vorzugsweise digitale Daten.

Der Verkehrssensor 1 - 1" kann gemäss unterschiedlichen Sensorprinzipien arbeiten. Vorzugsweise ist der Verkehrssensor 1 - 1" ein WIM Sensor 1 - 1". Der WIM Sensor 1 - 1" ist zylinderförmig mit einer Länge von 1.0 m bis 2.0 m und einem Durchmesser von 10 mm bis 100 mm. Der WIM Sensor 1 - 1" ist in eine Nut in der Fahrbahn LA, LA' der Zufahrten A1, A2 oder der Fahrbahn LB der Brücke B eingelegt, welche Nut so gross ausgelegt ist, dass der in die Nut eingelegte WIM Sensor 1 - 1" nicht aus der Nut über die Oberfläche der Fahrbahn LA, LA' der Zufahrten A1, A2 oder der Fahrbahn LB der Brücke B übersteht. Die Nut und der in die Nut eingelegte WIM Sensor 1 - 1" sind mit einer Ausgussmasse bündig mit der Oberfläche der Fahrbahn LA, LA' der Zufahrten A1, A2 oder der Fahrbahn LB der Brücke B vergossen. Die Fahrzeuge C, C' fahren somit über den in der Fahrbahn LA, LA' der Zufahrten A1, A2 oder der Fahrbahn LB der Brücke B eingebauten WIM Sensor 1 - 1".

Vorzugsweise ist der WIM Sensor 1 - 1" in einem von Null verschiedenen Winkel zur Fahrtrichtung der Fahrzeuge C, C' in der Fahrbahn LA, LA' der Zufahrten A1, A2 oder der Fahrbahn LB der Brücke B eingebaut, so dass die Fahrzeuge C, C' mit allen Achsen und allen Rädern über den WIM Sensor 1 - 1" fahren.

Vorzugsweise weist der WIM Sensor 1 - 1" entlang seiner Länge mehrere Messelemente auf, welche die Last eines jeden der Fahrzeuge C, C' mit einer Ortsauflösung von einigen Zentimetern in einem von Null verschiedenen Winkel bezüglich der Fahrtrichtung erfassen. Aufgrund dieser Ortsauflösung enthalten die Lastdaten LD1 - LD3 mindestens eine der folgenden Verkehrsinformationen: eine Last eines einzelnen Rades eines Fahrzeugs C, C', eine Position eines jeden Rades eines Fahrzeugs C, C' in mindestens einer Fahrspur LA1 - LA3, LA1' - LA3', LB1 - LB3, eine Last einer Achse eines Fahrzeugs C, C', eine Last eines Fahrzeugs C, C', eine Länge eines Fahrzeugs C, C'. Insbesondere kann der WIM Sensor 1 -
1" erfassen, ob ein Fahrzeug C, C' mit seinen Rädern in genau einer Fahrspur LA1 - LA3, LA1' - LA3', LB1 - LB3 fährt, oder ob ein Fahrzeug C, C' beispielsweise beim Überholen mit seinen Rädern in mehr als einer Fahrspur LA1 - LA3, LA1' - LA3', LB1 - LB3 fährt.

Vorzugsweise ist der WIM Sensor 1 - 1" ein piezoelektrischer WIM Sensor 1 - 1". Der piezoelektrische WIM Sensor 1 - 1" weist piezoelektrisches Material auf. Die Last der Fahrzeuge C, C' wirkt als Gravitationskraft auf das piezoelektrische Material und erzeugt elektrische Ladungen. Die Anzahl der elektrischen Ladung ist proportional zur Grösse der Last der Fahrzeuge C, C'. Der piezoelektrische WIM Sensor 1 - 1" weist einen Ladungsverstärker und einen Analog-Digital-Wandler auf. Der Ladungsverstärker verstärkt die Anzahl der Ladungen in eine analoge elektrische Spannung und der Analog-Digital-Wandler wandelt die elektrische Spannung in digitale Lastdaten LD1 - LD3.

Piezoelektrische WIM Sensoren 1 - 1" erfassen die Last der Fahrzeuge C, C' mit einer Erfassungsgenauigkeit von kleiner/gleich 10.0 %, vorzugsweise von kleiner/gleich 5.0 %, vorzugsweise kleiner/gleich 2.5 %. Um diese Genauigkeit zu erreichen, muss bei der Erfassung der Last der Fahrzeuge C, C' der Einfluss von Störkräften möglichst gering gehalten werden. Solche Störkräfte treten bei der Fahrt der Fahrzeuge C, C' auf, sie werden auch als Rollkräfte bezeichnet und breiten sich als Schwingungen in Fahrtrichtung und entgegen der Fahrtrichtung im Untergrund U, U' der Zufahrten A1, A2 sowie in der Struktur T der Brücke B aus. Diese Störkräfte überlagern sich mit der Erfassung der Last der Fahrzeuge C, C' und verfälschen somit die Erfassung der Last der Fahrzeuge C, C'.

Um solche Störkräfte gering zu halten, wird in der ersten Ausführungsform der Brücke B als Hängebrücke gemäss Fig. 1 und 2 der piezoelektrische WIM Sensor 1 - 1" in der Fahrbahn LA, LA' über dem Untergrund U, U' der Zufahrten A1, A2 eingebaut, Denn die Struktur T mit gespannten Stahlseilen und Stahlträgern der Hängebrücke ist schwingend gestaltet. Im Vergleich mit dieser schwingend gestalteten Struktur T dämpft der Untergrund U, U' der Zufahrten A1, A2 die Störkräfte um mindestens eine Grössenordnung stärker. Durch diese vergleichsweise stärkere Dämpfung der Störkräfte im Untergrund U, U' der Zufahrten A1, A2 wird der Einfluss der Störkräfte auf die Erfassung der Last der Fahrzeuge C, C' gering gehalten.

Anders ist dies in der zweiten Ausführungsform der Brücke B als Spannbetonbrücke gemäss Fig. 3 und 4. Die Struktur T der Spannbetonbrücke ist im Bereich der gespannten Betonplatten ausserhalb der Betonträger schwingend gestaltet Bereiche und im Bereich der Betonträger massiv gestaltet. Der massiv gestaltete Bereich der Struktur T dämpft die Störkräfte um mindestens eine Grössenordnung stärker als der schwingend gestaltete Bereich. Durch diese vergleichsweise stärkere Dämpfung der Störkräfte über den Betonträgern der Struktur T wird der Einfluss der Störkräfte auf die Erfassung der Last der Fahrzeuge C, C' gering gehalten. Der piezoelektrische WIM Sensor 1 - 1" ist daher in der Fahrbahn LB über den Betonträgern der Struktur T eingebaut.

### DER STRUKTURSENSOR 2 - 2‴

Die Vorrichtung D weist mindestens einen Struktursensor 2 - 2‴ auf. Der Struktursensor 2 - 2‴ hat die Funktion, eine Strukturantwort der Brücke B zu erfassen.

Vorzugsweise ist der Struktursensor 2 - 2‴ in der Struktur T der Brücke B eingebaut. In der beiden Ausführungsformen der Vorrichtung D gemäss Fig. 1 bis 4 umfasst der Struktursensor 2 - 2‴ einen ersten Struktursensor 2, welcher im ersten Brückenabschnitt B1 eingebaut ist, einen zweiten Struktursensor 2', welcher im zweiten Brückenabschnitt B2 eingebaut ist, einen dritten Struktursensor 2",welcher im dritten Brückenabschnitt B3 eingebaut ist und einer vierten Struktursensor 2‴, welcher im vierten Brückenabschnitt B4 eingebaut ist. Selbstverständlich kann der Fachmann die Erfindung mit einer anderen Anzahl als vier Struktursensoren realisieren.

Die Strukturantwort der Brücke B umfasst mindestens eine der folgenden physikalischen Grössen: eine Vibration, eine Dehnung, eine Verschiebung oder eine Neigungsänderung. Dementsprechend ist der Struktursensor 2 - 2‴ mindestens einer der folgenden Sensoren: ein Beschleunigungssensor zur Erfassung einer Vibration, ein Dehnungssensor zur Erfassung einer Dehnung, ein Wegsensor zur Erfassung einer Verschiebung oder ein Neigungssensor zur Erfassung einer Neigungsänderung. Der Struktursensor 2 - 2‴ kann gemäss unterschiedlichen Sensorprinzipien arbeiten. Die Struktursensoren 2 - 2‴ können miniaturisiert als Micro Electro Mechanical Systems (MEMS) gefertigt sein.

Der Struktursensor 2 - 2‴ erzeugt für die erfasste Strukturantwort Strukturdaten SD1 - SD4. Vorzugsweise erzeugt der Struktursensor 2 - 2‴ die Strukturdaten SD1 - SD4 mit einer Zeitauflösung von kleiner/gleich 10 msec, vorzugsweise von kleiner/gleich 1 msec, vorzugsweise von kleiner/gleich 1 µsec. In der Ausführungsform der Vorrichtung D gemäss Fig. 1 umfassen die Strukturdaten SD1 - SD4 erste Strukturdaten SD1, welche vom ersten Struktursensor 2 im ersten Brückenabschnitt B1 erzeugt werden, zweite Strukturdaten SD2, welche vom zweiten Struktursensor 2' im zweiten Brückenabschnitt B2 erzeugt werden, dritte Strukturdaten SD3, welche vom dritten Struktursensor 2" im dritten Brückenabschnitt B3 erzeugt werden und vierte Strukturdaten SD4, welche vom vierten Struktursensor 2''' im vierten Brückenabschnitt B4 erzeugt werden. Die Strukturdaten SD1 - SD4 sind vorzugsweise digitale Daten.

Vorzugsweise ist der Struktursensor 2 - 2‴ ein Beschleunigungssensor 2 - 2‴ wie ein kapazitiver Beschleunigungssensor 2 - 2‴, ein piezoelektrischer Beschleunigungssensor 2 - 2‴, ein piezoresistiver Beschleunigungssensor 2 - 2‴, ein optischer Beschleunigungssensor 2 - 2‴, usw. Der Beschleunigungssensor 2 - 2‴ weist ein Gehäuse auf, über welches er an der Struktur T der Brücke B befestigt ist. Im Gehäuse ist eine seismische Masse angeordnet. Bei Beschleunigung der Brücke B ändert die seismische Masse aufgrund ihrer Trägheit ihre Lage relativ zum Gehäuse und übt eine ihrer Beschleunigung proportionale Kraft aus, welche Kraft ein Messignal erzeugt. Der Beschleunigungssensor 2 - 2‴ weist einen Analog-Digital-Wandler auf, welcher das Messsignal in digitale Strukturdaten SD1 - SD4 wandelt.

Vorzugsweise ist der Struktursensor 2 - 2‴ ein Dehnungssensor 2 - 2‴ wie ein Dehnungsmessstreifen (DMS) 2 - 2‴, ein piezoresistiver Sensor 2 - 2‴, ein piezoelektrischer Sensor 2 - 2‴, ein optischer Sensor 2 - 2‴, usw. Der Dehnungssensor 2 - 2‴ weist ein Gehäuse auf, über welches er an der Struktur T der Brücke B befestigt ist. Im Gehäuse sind Kontaktflächen angeordnet. Eine Dehnung der Brücke B führt zu einer Abstandsänderung zwischen den Kontaktflächen. Die Abstandsänderung erzeugt ein Messignal. Der Dehnungssensor 2 - 2‴ weist einen Analog-Digital-Wandler auf, welcher das Messsignal in digitale Strukturdaten SD1 - SD4 wandelt.

Vorzugsweise ist der Struktursensor 2 - 2‴ ein Wegsensor 2 - 2‴ wie ein Potentiometersensor 2 - 2‴, ein induktiver Wegsensor 2 - 2‴, usw. Der Wegsensor 2 - 2‴ weist ein Gehäuse auf, über welches er an der Struktur T der Brücke B befestigt ist. Im Gehäuse sind Bezugspunkte angeordnet. Eine Verschiebung der Brücke B zwischen den Bezugspunkten erzeugt ein Messignal. Der Wegsensor 2 - 2‴ weist einen Analog-Digital-Wandler auf, welcher das Messignal in digitale Strukturdaten SD1 - SD4 wandelt.

Vorzugsweise ist der Struktursensor 2 - 2‴ ein Neigungssensor 2 - 2‴ wie ein kapazitiver Neigungssensor 2 - 2". Der Neigungssensor 2 - 2‴ weist ein Gehäuse auf, über welches er an der Struktur T der Brücke B befestigt ist. Im Gehäuse ist eine Kapazität angeordnet. Eine Neigungsänderung der Brücke B erzeugt eine Kapazitätsänderung als Messignal. Der Neigungssensor 2 - 2‴ weist einen Analog-Digital-Wandler auf, welcher das Messsignal in digitale Strukturdaten SD1 - SD4 wandelt.

Der Struktursensor 2 - 2‴ ist in einem bekannten Sensorabstand d2 - d2''' zum Verkehrssensor 1 - 1" angeordnet.

In den ersten Ausführungsformen der Vorrichtung D gemäss Fig. 1 und 2 ist der Struktursensor 2 - 2''' in einem zweiten Sensorabstand d2 - d2''' zum ersten Verkehrssensor 1 angeordnet und in einem dritten Sensorabstand d3 - d3''' zum zweiten Verkehrssensor 1' angeordnet. Der erste Struktursensor 2 ist in einem ersten zweiten Sensorabstand d2 zum ersten Verkehrssensor 1 angeordnet und in einem ersten dritten Sensorabstand d3 zum zweiten Verkehrssensor 1' angeordnet. Der zweite Struktursensor 2' ist in einem zweiten zweiten Sensorabstand d2' zum ersten Verkehrssensor 1 angeordnet und in einem zweiten dritten Sensorabstand d3' zum zweiten Verkehrssensor 1' angeordnet. Der dritte Struktursensor 2" ist in einem dritten zweiten Sensorabstand d2" zum ersten Verkehrssensor 1 angeordnet und in einem dritten dritten Sensorabstand d3'' zum zweiten Verkehrssensor 1' angeordnet. Und der vierte Struktursensor 2''' ist in einem vierten zweiten Sensorabstand d2‴ zum ersten Verkehrssensor 1 angeordnet und in einem vierten dritten Sensorabstand d3''' zum zweiten Verkehrssensor 1' angeordnet.

In den zweiten Ausführungsformen der Vorrichtung D gemäss Fig. 3 und 4 ist der Struktursensor 2 - 2''' in einem zweiten Sensorabstand d2 - d2‴ zu den Verkehrssensor 1 - 1" angeordnet. Der erste Struktursensor 2 ist in einem ersten zweiten Sensorabstand d2 zu den Verkehrssensoren 1 - 1" angeordnet. Der zweite Struktursensor 2' ist in einem zweiten zweiten Sensorabstand d2' zu den Verkehrssensoren 1 - 1" angeordnet. Der dritte Struktursensor 2" ist in einem dritten zweiten Sensorabstand d2'' zu den Verkehrssensoren 1 - 1" angeordnet. Und der vierte Struktursensor 2‴ ist in einem vierten zweiten Sensorabstand d2''' zu den Verkehrssensoren 1 - 1" angeordnet.

### DER WEITERE VERKEHRSSENSOR 3 - 3ʺʺ

Die Vorrichtung D kann mindestens einen weiteren Verkehrssensor 3 - 3ʺʺ aufweisen. Der weitere Verkehrssensor 3 - 3ʺʺ ist optional und hat die Funktion, mindestens eine weitere Verkehrsinformation der über die Brücke B fahrenden Fahrzeuge C, C' zu erfassen. Im Sinne der Erfindung bedeutet "optional", dass der einen weiteren Verkehrssensor 3 - 3ʺʺ in der Vorrichtung D nicht zwingend vorhanden sein muss.

Der weitere Verkehrssensor 3 - 3ʺʺ kann auf den Zufahrten A1, A2 oder auf der Brücke B angeordnet sein.

In der ersten Ausführungsform der Vorrichtung D gemäss Fig. 1 und 2 umfasst der weitere Verkehrssensor 3 - 3ʺʺ einen ersten weiteren Verkehrssensor 3, welcher auf der ersten Zufahrt A1 angeordnet ist und einen zweiten weiteren Verkehrssensor 3', welcher auf der zweiten Zufahrt A2 angeordnet ist.

In der zweiten Ausführungsform der Vorrichtung D gemäss Fig. 3 und 4 umfasst der weitere Verkehrssensor 3 - 3ʺʺ einen ersten weiteren Verkehrssensor 3, welcher auf dem ersten Brückenabschnitt B1 angeordnet ist, einen zweiten weiteren Verkehrssensor 3', welcher auf dem zweiten Brückenabschnitt B2 angeordnet ist, einen dritten weiteren Verkehrssensor 3'', welcher auf dem Grenzbereich des zweiten und dritten Brückenabschnitts B2, B3 bei den Verkehrssensoren 1 - 1" angeordnet ist, einen vierten weiteren Verkehrssensor 3‴, welcher auf dem dritten Brückenabschnitt B3 angeordnet ist und einen fünften weiteren Verkehrssensor 3ʺʺ, welcher auf dem vierten Brückenabschnitt B4 angeordnet ist.

Der weitere Verkehrssensor 3 - 3'''' kann gemäss unterschiedlichen Sensorprinzipien arbeiten. Vorzugsweise ist der weitere Verkehrssensor 3 - 3ʺʺ mindestens einer der folgenden Sensoren: eine Induktionsschlaufe zur Erfassung der Präsenz eines der Fahrzeuge C, C' als Verkehrsinformation, ein Bildsensor wie ein Fotoapparat, eine Videokamera, usw. zur Erfassung mindestens einer der folgenden Verkehrsinformationen: ein Bild eines der Fahrzeuge C, C', ein Nummernschild eines der Fahrzeuge C, C', eine Fahrspur LA1 - LA3, LA1' - LA3', LB1 - LB3 eines der Fahrzeuge C, C' oder ein Geschwindigkeitssensor wie ein Radargerät, ein Lidargerät, usw. zur Erfassung einer Geschwindigkeit V eines der Fahrzeuge C, C' als Verkehrsinformation.

In der ersten Ausführungsform der Vorrichtung D gemäss Fig. 1 und 2 sind die weiteren Verkehrssensoren 3, 3' Geschwindigkeitssensoren, welche für eine erfasste Geschwindigkeit V eines der Fahrzeuge C, C' weitere Verkehrsdaten TD1, TD2 erzeugen. Die Geschwindigkeitssensoren können so die Geschwindigkeit V eines Fahrzeugs C, C' bei der Fahrt über die Brücke B erfassen. Die Geschwindigkeitssensoren können so auch eine Änderung der Geschwindigkeit V eines Fahrzeugs C, C' bei der Fahrt über die Brücke B erfassen.

In der zweiten Ausführungsform der Vorrichtung D gemäss Fig. 3 und 4 sind die weiteren Verkehrssensoren 3 - 3ʺʺ Bildsensoren, welche für eine erfasste Geschwindigkeit V eines der Fahrzeuge C, C' weitere Verkehrsdaten TD1 - TD5 erzeugen. Die Bildsensoren können so ein Fahrzeug C, C' bei der Fahrt über die Brücke B in jedem Brückenabschnitt B1 - B4 erfassen. Die Bildsensoren können so auch den Brückenabschnitt B1 - B4 erfassen, in welchem ein Fahrzeug C, C' bei der Fahrt über die Brücke B einen Wechsel der Fahrspur LB1 - LB3 vornimmt.

Vorzugsweise erzeugt der weitere Verkehrssensor 3 - 3ʺʺ die weiteren Verkehrsdaten TD1 - TD5 mit einer Zeitauflösung von kleiner/gleich 10 msec, vorzugsweise von kleiner/gleich 1 msec, vorzugsweise von kleiner/gleich 1 µsec. Der erste weitere Verkehrssensor 3 erzeugt erste weitere Verkehrsdaten TD1. Der zweite weitere Verkehrssensor 3' erzeugt zweite weitere Verkehrsdaten TD2. Der dritte weitere Verkehrssensor 3'' erzeugt dritte weitere Verkehrsdaten TD3. Der vierte weitere Verkehrssensor 3‴ erzeugt vierte weitere Verkehrsdaten TD4. Und der fünfte weitere Verkehrssensor 3'''' erzeugt fünfte weitere Verkehrsdaten TD5. Die weiteren Verkehrsdaten TD1 - TD5 sind vorzugsweise digitale Daten.

### DER WEITERE STRUKTURSENSOR 4, 4'

Die Vorrichtung D kann mindestens einen weiteren Struktursensor 4, 4' aufweisen. Der weitere Struktursensor 4, 4' ist optional und hat die Funktion, mindestens eine weitere Information über Struktur T der Brücke B zu erfassen. Im Sinne der Erfindung bedeutet "optional", dass der einen weiteren Struktursensor 4, 4' in der Vorrichtung D nicht zwingend vorhanden sein muss.

Der weitere Struktursensor 4, 4' ist auf der Struktur T der Brücke B angeordnet. In den beiden Ausführungsformen der Vorrichtung D gemäss Fig. 1 bis 4 umfasst der weitere Struktursensor 4, 4' einen ersten weiteren Struktursensor 4, welcher auf dem Grenzbereich des ersten und zweiten Brückenabschnitts B1, B2 angeordnet ist und einen zweiten Struktursensor 4', welcher auf dem Grenzbereich des dritten und vierten Brückenabschnitts B3, B4 angeordnet ist.

Der weitere Struktursensor 4, 4' kann gemäss unterschiedlichen Sensorprinzipien arbeiten. Vorzugsweise ist der weitere Struktursensor 4, 4' mindestens einer der folgenden Sensoren: ein Temperatursensor zur Erfassung der Temperatur auf der Brücke B oder ein Feuchtigkeitssensor zur Erfassung der Feuchtigkeit auf der Brücke B oder ein Windsensor zur Erfassung der Windgeschwindigkeit auf der Brücke B.

In den beiden Ausführungsformen der Vorrichtung D gemäss Fig. 1 bis 4 ist der erste weitere Struktursensor 4 ein Feuchtigkeitssensor, welcher für die erfasste Feuchtigkeit der Brücke B erste weitere Strukturdaten AD1 erzeugt. Und der zweite weitere Struktursensor 4' ist ein Windsensor, welcher für die erfasste Windgeschwindigkeit auf der Brücke B zweite weitere Strukturdaten AD2 erzeugt. Vorzugsweise erzeugt der weitere Struktursensor 4, 4' die weiteren Strukturdaten AD1, AD2 mit einer Zeitauflösung von kleiner/gleich 10 msec, vorzugsweise von kleiner/gleich 1 msec, vorzugsweise von kleiner/gleich 1 µsec. Die weiteren Strukturdaten AD1, AD2 sind vorzugsweise digitale Daten.

### DIE ERFASSUNGSEINHEIT 8

Die Vorrichtung D weist mindestens eine Erfassungseinheit 8 auf. Die Erfassungseinheit 8 hat die Funktion, die Lastdaten LD1 - LD3 und die Strukturdaten SD1 - SD4 zu erfassen. Falls weitere Verkehrsdaten TD1 - TD5 bzw. weitere Strukturdaten AD1, AD2 erzeugt werden, hat die Erfassungseinheit 8 die weitere Funktion, die weiteren Verkehrsdaten AD1 - AD5 bzw. weiteren Strukturdaten AD1, AD2 zu erfassen.

Die Erfassungseinheit 8 ist räumlich nahe bei der Brücke B angeordnet. Im Sinne der Erfindung bezeichnet "räumlich nahe" eine kürzeste Entfernung von kleiner/gleich 1 km.

Die Erfassungseinheit 8 weist eine Recheneinheit und einen Datenspeicher auf. Die Recheneinheit kann eine Central Processing Unit (CPU), usw. sein. Der Datenspeicher kann ein eine Hard Disk (HD), eine Solid-State Disk (SSD), usw. sein.

### DIE ÜBERMITTLUNGSEINHEIT 5, 5', 6, 6', 7, 7', 9

Die Vorrichtung D weist mindestens eine Übermittlungseinheit 5, 5',6, 6', 7, 7', 9 auf. Die Übermittlungseinheit 5, 5',6, 6', 7, 7', 9 hat die erste Funktion, die Lastdaten LD1 - LD3 vom Verkehrssensor 1 - 1" und die Strukturdaten SD1 - SD4 vom Struktursensor 2 - 2‴ zur Erfassungseinheit 8 zu übermitteln. Falls weitere Verkehrsdaten TD1 - TD5 bzw. weitere Strukturdaten AD1, AD2 vorhanden sind, hat die Übermittlungseinheit 5, 5',6, 6', 7, 7', 9 die weitere Funktion, die weiteren Verkehrsdaten TD1 - TD5 vom weiteren Verkehrssensor 3 - 3'''' bzw. die weiteren Strukturdaten AD1, AD2 vom weiteren Struktursensor 4, 4' zur Erfassungseinheit 8 zu übermitteln.

Die Übermittlungseinheit 5, 5', 6, 6', 7, 7', 9 weist mindestens einen Feldbus 5, 5' und mindestens eine Aufbereitereinheit 6, 6' auf. Der Feldbus 5, 5' weist einen elektrischen Leiter auf. Die Aufbereitungseinheit 6, 6' weist eine Recheneinheit und einen Datenspeicher auf. Die Recheneinheit kann eine Central Processing Unit (CPU), usw. sein. Der Datenspeicher kann ein eine Hard Disk (HD), eine Solid-State Disk (SSD), usw. sein.

Der Feldbus 5, 5' verbindet den Struktursensor 2 - 2‴ elektrisch mit der Aufbereitereinheit 6, 6'. Falls ein weiterer Struktursensor 4, 4' vorhanden ist, verbindet der Feldbus 5, 5' den weiteren Struktursensor 4, 4' elektrisch mit der Aufbereitungseinheit 6, 6'.

In der Ausführungsform der Vorrichtung D gemäss Fig. 1 umfasst der Feldbus 5, 5' einen ersten Feldbus 5 und einen zweiten Feldbus 5' und die Aufbereitereinheit 6, 6' umfasst eine erste Aufbereitereinheit 6 und eine zweite Aufbereitereinheit 6'.

Vorzugsweise ist der Feldbus 5, 5' eine serielle Verbindung von bis zu zwanzig Struktursensoren 2 - 2‴ und weiteren Struktursensoren 4, 4' mit der Aufbereitereinheit 6, 6'. In der Ausführungsform der Vorrichtung D gemäss Fig. 1 verbindet der erste Feldbus 5 den ersten und den zweiten Struktursensor 2, 2' sowie den ersten weiteren Struktursensor 4 elektrisch in Serie mit der ersten Aufbereitungseinheit 6. Der zweite Feldbus 5' verbindet den dritten und den vierten Struktursensoren 2'', 2''' sowie den zweiten weiteren Struktursensor 4' elektrisch in Serie mit der zweiten Aufbereitereinheit 6'. Vorzugsweise weist der Feldbus 5, 5' eine Länge von kleiner/gleich 100 m auf.

Vorzugsweise übermittelt der Feldbus 5, 5' digitale Daten. Dazu übermittelt der Feldbus 5, 5' die Strukturdaten SD1 - SD4, sowie falls vorhanden, die weiteren Strukturdaten AD1, AD2 gemäss einem Protokoll in Datenpaketen vom Struktursensor 2 - 2‴ zur Aufbereitereinheit 6, 6'. Das Protokoll kann Ethernet, EtherCAT (Ethernet for Control Automation Technology), Ethernet Powerlink, Single Pair Ethernet (SPE), Sercos III, usw. sein.

Vorzugsweise synchronisiert der Feldbus 5, 5' den Struktursensor 2 - 2‴, sowie falls vorhanden, den weiteren Struktursensor 4, 4' und die Aufbereitereinheit 6, 6' mit einer Systemzeit. Dazu kann der Feldbus 5, 5' Network Time Protocol (NTP), Precision Time Protocol (PTP), EtherCAT Sync Manager, EtherCat Distributed Clock, usw. verwenden. Im Sinne der Erfindung bezeichnet "Synchronisierung" eine Systemzeit mit einer Systemgenauigkeit von kleiner/gleich 10 msec, vorzugsweise von kleiner/gleich 1 msec, vorzugsweise von kleiner/gleich 1 µsec. Gerade wenn die Struktursensoren 2 - 2‴, sowie falls vorhanden, die weiteren Struktursensoren 4, 4' nahe beieinander angeordnet sind, ist eine sehr genaue Synchronisierung mittels PTP oder EtherCAT Distributed Clock von kleiner/gleich 1 µsec erforderlich, da Zeitabweichungen dann einen starken Einfluss auf die Genauigkeit der Auswertung der Daten hat.

Vorzugsweise versorgt der Feldbus 5, 5' den Struktursensor 2 - 2‴, sowie falls vorhanden, den weiteren Struktursensor 4, 4' mit elektrischer Energie. Die Versorgung mit elektrischer Energie kann dann gemäss EtherCAT-P mit einer elektrischen Leistung von 24 V/ 3 A erfolgen.

Die Aufbereitungseinheit 6, 6' ist eingerichtet, die vom Feldbus 5, 5' übermittelten Strukturdaten SD1 - SD4, sowie falls vorhanden, die vom Feldbus 5, 5' übermittelten weiteren Strukturdaten AD1, AD2 im Datenspeicher zu speichern. Vorzugsweise sind bis zu acht Feldbusse 5, 5' parallel mit einer Aufbereitungseinheit 6, 6' elektrisch verbunden.

Die Übermittlungseinheit 5, 5', 6, 6', 7, 7', 9 weist mindestens ein nahes Netzwerk 7, 7' auf. Das nahe Netzwerk 7, 7' weist einen elektrischen Leiter oder einen Lichtwellenleiter auf. Vorzugsweise weist das nahe Netzwerk 7, 7' eine Länge von kleiner/gleich 1 km auf.

Das nahe Netzwerk 7, 7' verbindet den Verkehrssensor 1, 1' und die Aufbereitereinheit 6, 6' mit der Erfassungseinheit 8. Falls ein weiterer Verkehrssensor 3 - 3ʺʺ vorhanden ist, verbindet das nahe Netzwerk 7, 7' auch den weiteren Verkehrssensor 3 - 3ʺʺ elektrisch mit der Aufbereitungseinheit 6, 6'.

Das nahe Netzwerk 7, 7' umfasst ein erstes nahes Netzwerk 7 und ein zweites nahes Netzwerk 7'. Das erste nahe Netzwerk 7 und das zweite nahe Netzwerk 7' kann mehrere Unternetzwerke haben, die Daten über unterschiedliche Protokolle wie Ethernet, EtherCAT, Ethernet Powerlink, Single Pair Ethernet, Sercos III, usw. übermitteln.

In der ersten Ausführungsform der Vorrichtung D gemäss Fig. 1 und 2 verbindet das erste nahe Netzwerk 7 den ersten Verkehrssensor 1, den ersten weiteren Verkehrssensor 3 und die erste Aufbereitungseinheit 6 mit der Erfassungseinheit 8. Das zweite nahe Netzwerk 7' verbindet den zweiten Verkehrssensor 1', den zweiten weiteren Verkehrssensor 3' und die zweite Aufbereitungseinheit 6' mit der Erfassungseinheit 8.

In der zweiten Ausführungsform der Vorrichtung D gemäss Fig. 3 und 4 verbindet das erste nahe Netzwerk 7 die Verkehrssensoren 1 - 1'', die weiteren Verkehrssensoren 3 - 3ʺʺ und die erste Aufbereitungseinheit 6 mit der Erfassungseinheit 8. Das zweite nahe Netzwerk 7' verbindet die zweite Aufbereitungseinheit 6' mit der Erfassungseinheit 8.

Das nahe Netzwerk 7, 7' verbindet den Verkehrssensor 1 - 1" mit dem weiteren Verkehrssensor 3 - 3ʺʺ. Vorzugsweise erzeugt der Verkehrssensor 1 - 1" für die erfasste Last eines der Fahrzeuge C, C' neben den Lastdaten LD1 - LD3 auch mindestens ein Steuersignal SS - SS". Das Steuersignal SS - SS'' umfasst ein erstes Steuersignal SS vom ersten Verkehrssensor 1, ein zweites Steuersignal SS' vom zweiten Verkehrssensor 1' und ein drittes Steuersignal SS" vom dritten Verkehrssensor 1". Vorzugsweise sind der Verkehrssensor 1 - 1" und der weitere Verkehrssensor 3 - 3ʺʺ räumlich sehr nahe zueinander angeordnet. Im Sinne der Erfindung bezeichnet "räumlich sehr nahe" eine kürzeste Entfernung von kleiner/gleich 100 m. Vorzugsweise übermittelt das nahe Netzwerk 7, 7' das Steuersignal SS - SS" in Echtzeit vom Verkehrssensor 1 - 1" zum weiteren Verkehrssensor 3 - 3ʺʺ.

In der ersten Ausführungsform der Vorrichtung D gemäss Fig. 1 und 2 übermittelt das erste nahe Netzwerk 7 das erste Steuersignal SS vom ersten Verkehrssensor 1 an den ersten weiteren Verkehrssensor 3 und das zweite nahe Netzwerk 7' übermittelt das zweite Steuersignal SS' vom zweiten Verkehrssensor 1' an den zweiten weiteren Verkehrssensor 3'. Für das erste Steuersignal SS erfasst der erste weitere Verkehrssensor 3 die Geschwindigkeit V des ersten Fahrzeugs C, dessen Last als erste Lastdaten LD1 erfasst worden ist, und erzeugt für die erfasste Geschwindigkeit V erste weitere Verkehrsdaten TD1. Für das zweite Steuersignal SS' erfasst der zweite weitere Verkehrssensor 3' die Geschwindigkeit V des zweiten Fahrzeugs C', dessen Last als zweite Lastdaten LD2 erfasst worden ist, und erzeugt für die erfasste Geschwindigkeit V zweite weitere Verkehrsdaten TD2.

In der zweiten Ausführungsform der Vorrichtung D gemäss Fig. 3 und 4 übermittelt das erste nahe Netzwerk 7 das erste Steuersignal SS vom ersten Verkehrssensor 1 an den dritten weiteren Verkehrssensor 3", das erste nahe Netzwerk 7 übermittelt das zweite Steuersignal SS' vom zweiten Verkehrssensor 1' an den dritten weiteren Verkehrssensor 3" und das erste nahe Netzwerk 7 übermittelt das dritte Steuersignal SS" vom dritten Verkehrssensor 1" an den dritten weiteren Verkehrssensor 3''. Für das Steuersignal SS - SS'' erfasst der dritte weitere Verkehrssensor 3'' das Nummernschild des Fahrzeugs C, C', dessen Last als Lastdaten LD1 - LD3 erfasst worden ist, und erzeugt für die erfasste Geschwindigkeit V dritte weitere Verkehrsdaten TD3.

Vorzugsweise übermittelt das nahe Netzwerk 7, 7' digitale Daten. Das nahe Netzwerk 7, 7' übermittelt die Lastdaten LD1 - LD3 gemäss einem Protokoll in Datenpaketen vom Verkehrssensor 1 - 1" zur Erfassungseinheit 8. Falls vorhanden, übermittelt das nahe Netzwerk 7, 7' die weiteren Verkehrsdaten TD1 - TD5 gemäss einem Protokoll vom weiteren Verkehrssensor 3 - 3ʺʺ zur Erfassungseinheit 8. Das nahe Netzwerk 7, 7' übermittelt die Strukturdaten SD1 - SD4 gemäss einem Protokoll in Datenpaketen von der Aufbereitereinheit 6, 6' zur Erfassungseinheit 8. Und falls vorhanden, übermittelt das nahe Netzwerk 7, 7' die weiteren Strukturdaten AD1, AD2 gemäss einem Protokoll vom weiteren Struktursensor 4, 4' zur Erfassungseinheit 8. Das Protokoll kann Ethernet, usw. sein.

Vorzugsweise synchronisiert das nahe Netzwerk 7, 7' die Aufbereitereinheit 6, 6' und die Erfassungseinheit 8 mit einer Systemzeit. Dazu kann das nahe Netzwerk 7, 7' NTP, PTP, EtherCAT Sync Manager, EtherCat Distributed Clock, usw. verwenden. Gerade wenn die Verkehrssensoren 1 - 1", sowie falls vorhanden, die weiteren Verkehrssensoren 3 - 3ʺʺ nahe beieinander angeordnet sind, ist eine sehr genaue Synchronisierung mittels PTP von kleiner/gleich 1 µsec erforderlich, da Zeitabweichungen dann einen starken Einfluss auf die Genauigkeit der Auswertung der Daten hat.

Die Erfassungseinheit 8 ist eingerichtet, die vom nahe Netzwerk 7, 7' übermittelten Lastdaten LD1 - LD3 und Strukturdaten SD1 - SD4 sowie falls vorhanden die weiteren Verkehrsdaten TD1 - TD5 bzw. die weiteren Strukturdaten AD1, AD2 zu erfassen und im Datenspeicher zu speichern.

Die Lastdaten LD1 - LD3 und die Strukturdaten SD1 - SD4 und falls vorhanden die weiteren Verkehrsdaten TD1 - TD5 bzw. die weiteren Strukturdaten AD1, AD2 sind vorzugsweise digitale Daten. Bei Kenntnis der vorliegenden Erfindung können diese Daten aber auch analoge Signale sein. Die Übermittlungseinheit ist dann eingerichtet, analoge Signale zur Erfassungseinheit zu übermitteln. Die Erfassungseinheit weist dann mindestens einen Analog-Digital-Wandler auf, welcher die analogen Signale in digitale Daten wandelt.

### DIE AUSWERTEEINHEIT 10

Die Vorrichtung D weist mindestens eine Auswerteeinheit 10 auf. Die Auswerteeinheit 10 hat die Funktion, die Lastdaten LD1 - LD3 und die Strukturdaten SD1 - SD4 auszuwerten. Falls weitere Verkehrsdaten TD1 - TD5 bzw. weitere Strukturdaten AD1, AD2 vorhanden sind, hat die Auswerteeinheit 10 die Funktion, die weiteren Verkehrsdaten TD1 - TD5 bzw. die weiteren Strukturdaten AD1, AD2 auszuwerten.

Vorzugsweise ist die Auswerteeinheit 10 räumlich entfernt von der Brücke B angeordnet. Im Sinne der Erfindung bezeichnet "räumlich entfernt" eine kürzeste Entfernung von grösser/gleich 10 km.

Die Auswerteeinheit 10 weist eine Recheneinheit und einen Datenspeicher auf. Die Recheneinheit kann eine Central Processing Unit (CPU), usw. sein. Der Datenspeicher kann ein eine Hard Disk (HD), eine Solid-State Disk (SSD), usw. sein.

Die Übermittlungseinheit 5, 5', 6, 6', 7, 7', 9 hat die weitere Funktion, die Lastdaten LD1 - LD3, die Strukturdaten SD1 - SD4 sowie falls vorhanden, die weiteren Verkehrsdaten TD1 - TD5 bzw. die weiteren Strukturdaten AD1, AD2 von der Erfassungseinheit 8 zur Auswerteeinheit 10 zu übermitteln.

Die Übermittlungseinheit 5, 5', 6, 6', 7, 7', 9 weist mindestens ein entferntes Netzwerk 9 auf. Das entfernte Netzwerk 9 kann kabelgebunden oder kabellos sein.

Das entfernte Netzwerk 9 übermittelt die Lastdaten LD1 - LD3, die Strukturdaten SD1 - SD4 sowie falls vorhanden, die weiteren Verkehrsdaten TD1 - TD5 bzw. die weiteren Strukturdaten AD1, AD2 gemäss einem Protokoll in Datenpaketen von der Erfassungseinheit 8 zur Auswerteeinheit 10. Das Protokoll kann Ethernet, usw. sein.

Die Lastdaten LD1 - LD3 und die Strukturdaten SD1 - SD4 weisen Beträge XS, S, L, XL auf. Zur Veranschaulichung sind die Beträge vereinfacht als XS (Extra Small), S, (Small), L (Large) und XL (Extra Large) dargestellt, wobei XS einen sehr kleinen Betrag, S einen kleinen Betrag, L einen grossen Betrag und XL einen sehr grossen Betrag bezeichnet.

Das entfernte Netzwerk 9 übermittelt die Lastdaten LD1 - LD3, die Strukturdaten SD1 - SD4 sowie falls vorhanden, die weiteren Verkehrsdaten TD1 - TD5 bzw. die weiteren Strukturdaten AD1, AD2 mit einer Bandbreite BW von der Erfassungseinheit 8 zur Auswerteeinheit 10. Die Bandbreite BW gibt an, mit welchem Informationsgehalt die Lastdaten LD1 - LD3, die Strukturdaten SD1 - SD4 sowie falls vorhanden, die weiteren Verkehrsdaten TD1 - TD5 bzw. die weiteren Strukturdaten AD1, AD2 übermittelt werden. Die Auswerteeinheit 10 ist eingerichtet, die Bandbreite BW des weiteren Netzwerks 9 einzustellen. Die Bandbreite BW umfasst mindestens einen der folgende Betriebsmodi: normal oder hoch. Im normalen Betriebsmodus der Bandbreite BW ist der Informationsgehalt übermittelten Lastdaten LD1 - LD3 und Strukturdaten SD1 - SD4 sowie falls vorhanden, der weiteren Verkehrsdaten TD1 - TD5 bzw. der weiteren Strukturdaten AD1, AD2 mindestens zehnmal geringer als im hohen Betriebsmodus der Bandbreite BW. Die Auswerteeinheit 10 ist eingerichtet, durch Einstellung der Bandbreite BW die Übermittlung der Lastdaten LD1 - LD3, der Strukturdaten SD1 - SD4 sowie falls vorhanden, der weiteren Verkehrsdaten TD1 - TD5 bzw. der weiteren Strukturdaten AD1, Ad2 gezielt an ihre Bedürfnisse anzupassen.

Die Auswerteeinheit 10 ist eingerichtet, über Steuerbefehle die Bandbreite BW des entfernten Netzwerks 9 einzustellen. Vorzugsweise ist die Bandbreite BW bei sehr kleinen Beträgen XS oder kleinen Beträgen S der Lastdaten LD1 - LD3 und der Strukturdaten SD1 - SD4 im normalen Betriebsmodus. Bei kleinen Beträgen XS, S hat die Auswerteeinheit 10 kein Bedürfnis an einem hohen Informationsgehalt. Die Auswerteeinheit 10 stellt dann die Bandbreite BW auf normal ein. Denn beim Auftreten von sehr kleinen Beträgen XS oder kleinen Beträgen S hat die Auswerteeinheit 10 das Bedürfnis einer hohen Verfügbarkeit des entfernten Netzwerks 9, was durch die normale Bandbreite BW gewährleistet wird. Erst beim Auftreten von grossen Beträgen L oder sehr grossen Beträgen XL der Lastdaten LD1 - LD3 und der Strukturdaten SD1 - SD4 stellt die Auswerteeinheit 10 die Bandbreite BW auf einen hohen Betriebsmodus ein. Denn beim Auftreten von grossen Beträgen L oder sehr grossen Beträgen XL hat die Auswerteinheit 10 das Bedürfnis, die Lastdaten LD1 - LD3 und die Strukturdaten SD1 - SD4 mit einem hohen Informationsgehalt auszuwerten.

Die Auswerteeinheit 10 ist eingerichtet, die Lastdaten LD1 - LD3 und die Strukturdaten SD1 - SD4 zu einem Zustandsprofil P der Brücke B zu verknüpfen. Das Zustandsprofil P stellt die zeitliche Entwicklung der Last der Fahrzeuge C, C' und der Strukturantwort der Brücke B dar.

Die Auswerteeinheit 10 ist eingerichtet, im Zustandsprofil P die Beträge XS, S, L, XL der Lastdaten LD1 - LD3 zu Zeitpunkten t1 - t4 der Erzeugung der Lastdaten LD1 - LD3 mit den Beträgen XS, S, L, XL der Strukturdaten SD1 - SD4 zu Zeitpunkten t1 - t4 der Erzeugung der Strukturdaten SD1 - SD4 zu verknüpfen.

Die Lastdaten LD1 - LD3 werden vom Verkehrssensor 1 - 1" mit einer Zeitauflösung von kleiner/gleich 1 µsec erzeugt, auch die Strukturdaten SD1 - SD4 werden vom Struktursensor 2 - 2‴ mit einer Zeitauflösung von kleiner/gleich 1 µsec erzeugt. Die Lastdaten LD1 - LD3 und die Strukturdaten SD1 - SD4 werden von der Übermittlungseinheit 5, 5',6, 6', 7, 7', 9 synchronisiert mit einer Systemgenauigkeit von kleiner/gleich 1 µsec an die Auswerteeinheit 10 übermittelt. Dadurch ist die Verknüpfung der Lastdaten LD1 - LD3 und der Strukturdaten SD1 - SD4 zum Zustandsprofil P entsprechend genau. Durch diese kleine Systemauflösung und hohe Systemgenauigkeit lässt sich mit grosser Gewissheit eine Ursache-Wirkung-Beziehung zwischen der zeitlichen Entwicklung der Last der Fahrzeuge C, C' auf der Brücke B und der Strukturantwort der Brücke B bilden.

Der erste Sensorabstand d1 zwischen dem A-Sensor 1.1 - 1.1" und dem B-Sensor 1.1 - 1.2" einer Fahrspur LA1 - LA3, LA1' - LA3' ist bekannt. Für A-Sensoren 1.1 - 1.1" und B-Sensoren 1.2 - 1.2'', welche piezoelektrische WIM Sensoren 1 - 1" sind, erfolgt die Erfassung der Last der Fahrzeuge C, C' mit einer Erfassungsgenauigkeit von kleiner/gleich 10.0 %, vorzugsweise von kleiner/gleich 5.0 %, vorzugsweise von kleiner/gleich 2.5 %. Die Auswerteeinheit 10 ist eingerichtet, die Beträge XS, S, L, XL der Lastdaten LD1 - LD3 des A-Sensors 1.1 - 1.1" einer Fahrspur LA1 - LA3, LA1' - LA3' mit den Beträgen XS, S, L, XL der Lastdaten LD1 - LD3 des B-Sensors 1.2 - 1.2'' dieser Fahrspur LA1 - LA3, LA1' - LA3' zu vergleichen. Die Auswerteeinheit 10 ist eingerichtet, für die Beträge XS, S, L, XL der Lastdaten LD1 - LD3 des A-Sensors 1.1 - 1.1" einer Fahrspur LA1 - LA3, LA1' - LA3', welche im Rahmen der Erfassungsgenauigkeit gleich gross wie die Beträge XS, S, L, XL der Lastdaten LD1 - LD3 des B-Sensors 1.2 - 1.2" dieser Fahrspur LA1 - LA3, LA1' - LA3' sind, eine Zeitdauer t zwischen den Zeitpunkten t1 - t4 der Erzeugung der Lastdaten LD1 - LD3 des A-Sensors 1.1 - 1.1" und des B-Sensors 1.2 - 1.2" mit im Rahmen der Erfassungsgenauigkeit gleich grossen Beträgen XS, S, L, XL zu ermitteln. Die Auswerteeinheit 10 ist eingerichtet, den ersten Sensorabstand d1 durch die Zeitdauer t zu dividieren und so eine Geschwindigkeit V des Fahrzeugs C, C' dessen Last als Lastdaten LD1 - LD3 erfasst worden ist, zu ermitteln.

Der Sensorabstand d2 - d2''', d3 - d3‴ zwischen dem Verkehrssensor 1 - 1" und dem Struktursensor 2 - 2‴ ist bekannt. Die Auswerteeinheit 10 ist eingerichtet, den Sensorabstand d2 - d2‴, d3 - d3‴ zwischen dem Verkehrssensor 1 - 1" und dem Struktursensor 2 - 2‴ durch die Geschwindigkeit V des Fahrzeugs C, C', dessen Last als Lastdaten LD1 - LD3 erfasst worden ist, zu dividieren und so eine Fahrzeit TT zu ermitteln. Die Auswerteeinheit 10 ist eingerichtet, den Zeitpunkt t1 - t4 der Erzeugung der Lastdaten LD1 - LD3 zur Fahrzeit TT zu addieren, und so den Zeitpunkt t1 - t4 zu ermitteln, an dem sich dieses Fahrzeug C, C', je nach Anordnung des Struktursensors 2 - 2‴ bezüglich des Verkehrssensors 1 - 1" in Fahrtrichtung nach dem Verkehrssensors 1 - 1" oder vor dem Verkehrssensors 1 - 1", über dem Struktursensor 2 - 2‴ befindet oder befunden hat.

Die Auswerteeinheit 10 ist eingerichtet, für die Zeitpunkte t1 - t4 der Erzeugung von Lastdaten LD1 - LD3 durch den Verkehrssensor 1 - 1" eine Auffahrtenzahl X zu ermitteln. Und da die Brücke B eine bekannte Länge d aufweist ist die Auswerteeinheit 10 eingerichtet, die Länge d durch die Geschwindigkeit V des Fahrzeugs C, C', dessen Last als Lastdaten LD1 - LD3 erfasst worden ist, zu dividieren und so eine Aufenthaltszeit PT dieses Fahrzeugs C, C' auf der Brücke B zu ermitteln. Weiter ist die Auswerteeinheit 10 eingerichtet, die Auffahrtenzahl X durch die Aufenthaltszeit PT zu dividieren und so eine Fahrzeugzahl N auf der Brücke B zu ermitteln.

Somit ist die Auswerteeinheit 10 eingerichtet, den Zeitpunkt t1 - t4 der Erzeugung der Lastdaten LD1 - LD3 durch den Verkehrssensor 1 - 1" durch Ermittlung der Fahrzeit TT eines der Fahrzeuge C, C', dessen Last als Lastdaten LD1 - LD3 erfasst worden ist, mit dem Zeitpunkt t1 - t4 der Erzeugung der Strukturdaten SD1 - SD4 durch den Struktursensor 2 - 2‴ zu verknüpfen.

Die Auswerteeinheit 10 ist eingerichtet, die weiteren Verkehrsdaten TD1 - TD5 in der Reihenfolge der Zeitpunkte t1 - t4 der Erzeugung der weiteren Verkehrsdaten TD1 - TD5 darzustellen. Die Auswerteeinheit 10 ist eingerichtet, in den Verkehrsdaten TD1 - TD5 mindestens eine der folgenden Verkehrsinformationen: die Präsenz eines der Fahrzeuge C, C', das Bild eines der Fahrzeuge C, C', das Nummernschild eines der Fahrzeuge C, C', die Fahrspur LA1 - LA3, LA1' - LA3', LB1 - LB3 eines der Fahrzeuge C, C', die Geschwindigkeit V eines der Fahrzeuge C, C' zu erkennen. Die Auswerteeinheit 10 ist eingerichtet, die Fahrt des Fahrzeugs C, C' in der Reihenfolge der Zeitpunkte t1 - t4 der in den Verkehrsdaten TD1 - TD5 erkannten Verkehrsinformation darzustellen. Die Auswerteeinheit 10 ist eingerichtet, einen Wechsel der Fahrspur LA1 - LA3, LA1' - LA3', LB1 - LB3 bei der Fahrt eines der Fahrzeuge C, C' in der Reihenfolge der Zeitpunkte t1 - t4 der in den Verkehrsdaten TD1 - TD5 erkannten Fahrspur LA1 - LA3, LA1' - LA3', LB1 - LB3 dieses Fahrzeugs C, C' darzustellen. Die Auswerteeinheit 10 ist eingerichtet, eine Änderung der Geschwindigkeit V eines Fahrzeugs C, C' bei der Fahrt dieses Fahrzeugs C, C' in der Reihenfolge der Zeitpunkte t1 - t4 des in den Verkehrsdaten TD1 - TD5 erkannten Bilds des Fahrzeugs C, C' oder des in den Verkehrsdaten TD1 - TD5 erkannten Nummernschilds des Fahrzeugs C, C' darzustellen.

### DAS ZUSTANDSPROFIL P

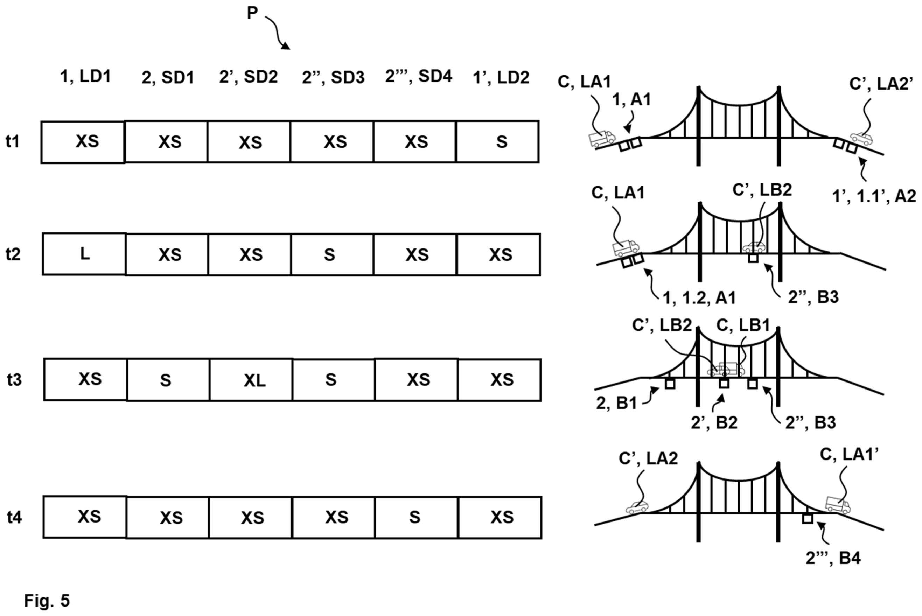

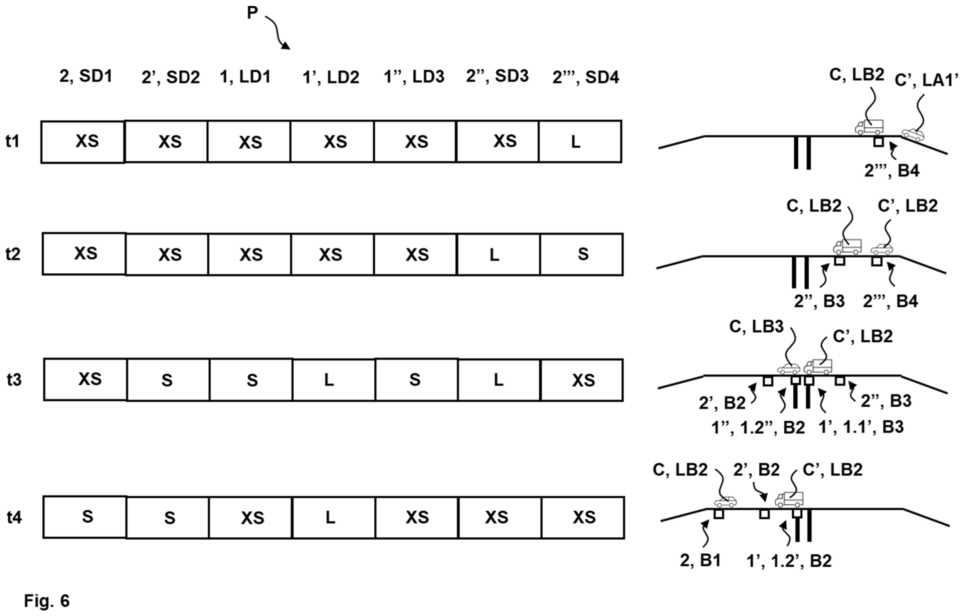

Die Fig. 5 und 6 zeigen schematisch zwei Beispiele eines Zustandsprofils P.

Das Beispiel des Zustandsprofils P gemäss Fig. 5 ist von der ersten Ausführungsform der Vorrichtung D gemäss Fig. 1 und 2 für die Ausführungsform der Brücke B und der Zufahrten A1, A2 gemäss Fig. 1 und 2 verknüpft worden.

Zum ersten Zeitpunkt t1 befindet sich das erste Fahrzeug C in der ersten Fahrspur LA1 der ersten Zufahrt A1 räumlich noch vor dem ersten Verkehrssensor 1 der ersten Zufahrt A1. Der erste Verkehrssensor 1 erfasst daher keine Last und erzeugt erste Lastdaten LD1 mit dem Betrag XS. Das zweite Fahrzeug C' fährt gerade in der zweiten Fahrspur LA2' der zweiten Zufahrt A2 über den zweiten Verkehrssensor 1' der zweiten Zufahrt A2. Das zweite Fahrzeug C' befindet sich mit seiner Vorderachse über dem zweiten A-Sensor 1.1' des zweiten Verkehrssensors 1'. Der zweite Verkehrssensor 1' erfasst die Last des zweiten Fahrzeugs C' von 2000 kg und erzeugt für die erfasste Last zweite Lastdaten LD2 mit dem Betrag S. Die vier Struktursensoren 2 - 2‴ der Brücke B erfassen keine Strukturantwort und erzeugen daher Strukturdaten SD1 - SD4 mit dem Betrag XS.

Zum zweiten Zeitpunkt t2 fährt das erste Fahrzeug C in der ersten Fahrspur LA1 der ersten Zufahrt A1 gerade über den ersten Verkehrssensor 1 der ersten Zufahrt A1, während sich das zweite Fahrzeug C' auf der zweiten Fahrspur LB2 im dritten Brückenabschnitt B3 befindet. Das erste Fahrzeug C befindet sich mit seiner Vorderachse über dem ersten B-Sensor 1.2 des ersten Verkehrssensors 1. Der erste Verkehrssensor 1 erfasst die Last des ersten Fahrzeugs C und erzeugt für die erfasste Last von 10000 kg erste Lastdaten LD1 mit dem Betrag L. Das zweite Fahrzeug C' beeinflusst die Struktur T der Brücke B. Die Strukturantwort der Brücke B ist schwach. Für die beeinflusste Struktur T der Brücke B erzeugt der dritte Struktursensor 2" des dritten Brückenabschnitts B3 dritte Strukturdaten SD3 mit dem Betrag S. Der zweite Verkehrssensor 1' erfasst keine Last und erzeugt zweite Lastdaten LD2 mit dem Betrag XS. Der erste, zweite und vierte Struktursensor 2, 2' und 2''' erfassen ebenfalls keine Strukturantwort und erzeugen daher Strukturdaten SD1, SD2 und SD4 mit dem Betrag XS.

Zum dritten Zeitpunkt t3 befinden sich die beiden Fahrzeuge C, C' im zweiten Brückenabschnitt B2. Die beiden Fahrzeuge C, C' kreuzen sich in ihren Fahrspuren LB1, LB2 und beeinflussen die Struktur T der Brücke B. Die beiden Fahrzeuge C, C' befinden sich mit ihren Hinterachsen über dem zweiten Struktursensor 2' des zweiten Brückenabschnitts B2. Aufgrund der lokal relativ grossen Gesamtlast von 12000 kg der beiden Fahrzeuge C, C' ist die Strukturantwort der Brücke B sehr stark. Für die beeinflusste Struktur T der Brücke B erzeugt der zweite Struktursensor 2' des zweiten Brückenabschnitts B2 zweite Strukturdaten SD2 mit dem Betrag XL. Der erste und dritte Struktursensor 2, 2'' im angrenzenden ersten und dritten Brückenabschnitt B1, B3 erzeugen für die beeinflusste Struktur T der Brücke B erste und dritte Strukturdaten SD1, SD3 mit dem Betrag S. Die beiden Verkehrssensoren 1, 1' erfassen keine Last und erzeugen daher Lastdaten LD1, LD2 mit dem Betrag XS.

Zum vierten Zeitpunkt t4 haben die beiden Fahrzeuge C, C' die Brücke B verlassen und fahren auf den Zufahrten A1, A2. Das erste Fahrzeug C fährt in der ersten Fahrtspur LA1' der zweiten Zufahrt A2. Obwohl das erste Fahrzeug C die Brücke B verlassen hat, beeinflusst es aufgrund seiner relativ grossen Last von 10000 kg die Struktur T der Brücke B. Die Strukturantwort der Brücke B ist schwach. Für die beeinflusste Struktur T der Brücke B erzeugt der vierte Struktursensor 2''' des vierten Brückenabschnitts B4 vierte Strukturdaten SD4 mit dem Betrag S. Das zweite Fahrzeug C' fährt gerade in der zweiten Fahrspur LA2 der ersten Zufahrt A1 über den ersten Verkehrssensor 1 der ersten Zufahrt A1. Die ersten, zweiten und dritten Struktursensoren 2 - 2" der Brücke B erfassen keine Strukturantwort und erzeugen daher erste, zweite und dritte Strukturdaten SD1 - SD3 mit dem Betrag XS.

Das Beispiel des Zustandsprofils P gemäss Fig. 6 ist von der zweiten Ausführungsform der Vorrichtung D gemäss Fig. 3 und 4 für die Ausführungsform der Brücke B und der Zufahrten A1, A2 gemäss Fig. 3 und 4 verknüpft worden.

Zum ersten Zeitpunkt t1 fährt das erste Fahrzeug C in der zweiten Fahrspur LB2 der Brücke B gerade über den vierten Struktursensor S''' des vierten Brückenabschnitts B4. Das erste Fahrzeug C beeinflusst die Struktur T der Brücke B. Die Strukturantwort der Brücke B ist stark. Für die beeinflusste Struktur T der Brücke B erzeugt der vierte Struktursensor 2''' des vierten Brückenabschnitts B4 vierte Strukturdaten SD4 mit dem Betrag L. Das zweite Fahrzeug C' befindet sich in der ersten Fahrspur LA1' der zweiten Zufahrt A2 räumlich noch vor der Brücke B. Die Verkehrssensoren 1 - 1" erfassen keine Last und erzeugen Lastdaten LD1 - LD3 mit dem Betrag XS. Auch die ersten, zweiten und dritten Struktursensoren 2 - 2'' der Brücke B erfassen keine Strukturantwort und erzeugen daher Strukturdaten SD1 - SD3 mit dem Betrag XS.

Zum zweiten Zeitpunkt t2 fährt das erste Fahrzeug C weiterhin in der zweiten Fahrspur LB2 der Brücke B gerade über den dritten Struktursensor S'' des dritten Brückenabschnitts B3. Das erste Fahrzeug C beeinflusst die Struktur T der Brücke B. Die Strukturantwort der Brücke B ist stark. Für die beeinflusste Struktur T der Brücke B erzeugt der dritte Struktursensor 2'' des dritten Brückenabschnitts B3 dritte Strukturdaten SD3 mit dem Betrag L. Das vergleichsweise schneller fahrende zweite Fahrzeug C' setzt zum Überholen des ersten Fahrzeugs C an. Deshalb hat das zweite Fahrzeug C' die Fahrspur gewechselt und befindet sich nun in der zweiten Fahrspur LB2 der Brücke B gerade über den vierten Struktursensor S''' des vierten Brückenabschnitts B4. Das zweite Fahrzeug C' beeinflusst die Struktur T der Brücke B. Die Strukturantwort der Brücke B ist schwach. Für die beeinflusste Struktur T der Brücke B erzeugt der vierte Struktursensor 2''' des vierten Brückenabschnitts B4 vierte Strukturdaten SD4 mit dem Betrag S. Die Verkehrssensoren 1 - 1" erfassen keine Last und erzeugen Lastdaten LD1 - LD3 mit dem Betrag XS. Und auch die ersten und zweiten Struktursensoren 2, 2' der Brücke B erfassen keine Strukturantwort und erzeugen daher Strukturdaten SD1, SD2 mit dem Betrag XS.

Zum dritten Zeitpunkt t3 hat das zweite Fahrzeug C' in der dritten Fahrspur LB3 der Brücke B gerade das erste Fahrzeug C in der zweiten Fahrspur LB2 der Brücke B überholt. Die beiden Fahrzeuge C, C' befinden sich im Grenzbereich des zweiten und dritten Brückenabschnitts B2, B3. Das zweite Fahrzeug C' befindet sich mit seiner Hinterachse gerade über dem dritten B-Sensor 1.2" des dritten Verkehrssensors 1" vom zweiten Brückenabschnitt B2. Der dritte Verkehrssensor 1" erfasst die Last des zweiten Fahrzeugs C' von 2000 kg und erzeugt für die erfasste Last dritte Lastdaten LD3 mit dem Betrag S. Das erste Fahrzeug C befindet sich mit seiner Vorderachse gerade über dem zweiten A-Sensor 1.1' des zweiten Verkehrssensors 1' vom dritten Brückenabschnitt B3. Der zweite Verkehrssensor 1' erfasst die Last des ersten Fahrzeugs C von 10000 kg und erzeugt für die erfasste Last zweite Lastdaten LD2 mit dem Betrag L. Die beiden Fahrzeuge C, C' beeinflussen die Struktur T der Brücke B. Aufgrund der lokal relativ grossen Gesamtlast von 12000 kg der beiden Fahrzeuge C, C' ist die Strukturantwort der Brücke B stark. Für die beeinflusste Struktur T der Brücke B erzeugt der zweite Struktursensor 2' des zweiten Brückenabschnitts B2 zweite Strukturdaten SD2 mit dem Betrag S. Der dritte Struktursensor 2'' im dritten Brückenabschnitt B1, B3 erzeugt für die beeinflusste Struktur T der Brücke B dritte Strukturdaten SD3 mit dem Betrag L. Die ersten und vierten Struktursensoren 2, 2‴ der Brücke B erfassen keine Strukturantwort und erzeugen daher Strukturdaten SD1, SD4 mit dem Betrag XS.

Zum vierten Zeitpunkt t4 hat das zweite Fahrzeug C' wieder in die zweite Fahrspur LB2 der Brücke B gewechselt und fährt gerade über den ersten Struktursensor S des ersten Brückenabschnitts B1, während sich das vergleichsweise langsamer fahrende erste Fahrzeug C weiterhin in der zweiten Fahrspur LB2 der Brücke B befindet. Das erste Fahrzeug C fährt mit seiner Hinterachse gerade über dem zweiten B-Sensor 1.2' des zweiten Verkehrssensors 1' vom zweiten Brückenabschnitt B2. Der zweite Verkehrssensor 1' erfasst die Last des ersten Fahrzeugs C von 10000 kg und erzeugt für die erfasste Last zweite Lastdaten LD2 mit dem Betrag L. Die beiden Fahrzeuge C, C' beeinflussen die Struktur T der Brücke B. Die Strukturantwort der Brücke B ist schwach. Für die beeinflusste Struktur T der Brücke B erzeugt der erste Struktursensor 2 erste Strukturdaten SD1 mit dem Betrag S und auch der zweite Struktursensor 2 erzeugt zweite Strukturdaten SD2 mit dem Betrag S.

### Bezugszeichenliste

- 1 - 1": Verkehrssensor
- 1.1 - 1.1': A-Sensor
- 1.2 - 1.2': B-Sensor
- 2 - 2‴: Struktursensor
- 3 - 3ʺʺ: weiterer Verkehrssensor
- 4, 4': weiterer Struktursensor
- 5, 5': Feldbus
- 6, 6': Aufbereitereinheit
- 7, 7': nahes Netzwerk
- 8: Erfassungseinheit
- 9: entferntes Netzwerk
- 10: Auswerteeinheit
- A1, A2: Zufahrt
- AD1, AD2: weitere Strukturdaten
- B: Brücke
- B1 - B4: Brückenabschnitt
- BW: Bandbreite
- C, C': Fahrzeug
- d: Länge der Brücke
- d1: erster Sensorabstand
- d2 - d2‴: zweiter Sensorabstand
- d3 - d3‴: dritter Sensorabstand
- D: Vorrichtung
- L: Fahrbahn
- LA1 - LA3: Fahrspur der Zufahrt
- LB1 - LB3: Fahrspur der Brücke
- LD1 - LD3: Lastdaten
- N: Fahrzeugzahl
- P: Zustandsprofil
- PT: Aufenthaltszeit
- SD1 - SD4: Strukturdaten
- SS - SS": Steuersignal
- t: Zeitdauer
- t1 - t4: Zeitpunkt
- T: Struktur
- TD1 - TD5: weitere Verkehrsdaten
- TT: Fahrzeit
- U, U': Untergrund
- V: Geschwindigkeit
- X: Auffahrtenzahl
- XS, S, L, XL: Betrag

## Patentansprüche

1. Verfahren zur Ermittlung des Zustandes einer Brücke (B); mit mindestens einem Verkehrssensor (1 - 1") zur Erfassung der Last von über die Brücke (B) fahrenden Fahrzeugen (C, C'), von welchem Verkehrssensor (1 - 1") für die erfasste Last Lastdaten (LD1 - LD3) erzeugt werden; und mit einer Auswerteeinheit (10) zur Auswertung der Lastdaten (LD1 - LD3); **dadurch gekennzeichnet, dass** mindestens ein Struktursensor (2 - 2''') zur Erfassung einer Strukturantwort der Brücke (B) bereitgestellt wird, welche Strukturantwort mindestens eine der folgenden physikalischen Grössen umfasst: eine Vibration, eine Dehnung, eine Verschiebung oder eine Neigungsänderung, von welchem Struktursensor (2 - 2‴) für die erfasste Strukturantwort Strukturdaten (SD1 - SD4) erzeugt werden; und dass die Auswerteeinheit (10) eingerichtet ist, die Lastdaten (LD1 - LD3) und die Strukturdaten (SD1 - SD4) zu einem Zustandsprofil (P) der Brücke (B) zu verknüpfen, welches Zustandsprofil (P) die zeitliche Entwicklung der Last der Fahrzeuge (C, C') und der Strukturantwort der Brücke (B) darstellt.

2. Verfahren gemäss Anspruch 1, **dadurch gekennzeichnet, dass** vom Verkehrssensor (1 - 1") die Lastdaten (LD1 - LD3) zu Zeitpunkten (t1 - t4) erzeugt werden; dass vom Struktursensor (2 - 2‴) die Strukturdaten (SD1 - SD4) zu Zeitpunkten (t1 - t4) erzeugt werden; und dass die Auswerteeinheit (10) eingerichtet ist, im Zustandsprofil (P) die Zeitpunkte (t1 - t4) der Erzeugung der Lastdaten (LD1 - LD3) mit den Zeitpunkten (t1 - t4) der Erzeugung der Strukturdaten (SD1 - SD4) zu verknüpfen.

3. Verfahren gemäss Anspruch 2, **dadurch gekennzeichnet, dass** vom Verkehrssensor (1 - 1") die Lastdaten (LD1 - LD3) mit einer Zeitauflösung von kleiner/gleich 10 msec, vorzugsweise von kleiner/gleich 1 msec, vorzugsweise von kleiner/gleich 1 µsec erzeugt werden; dass vom Struktursensor (2 - 2‴) die Strukturdaten (SD1 - SD4) mit einer Zeitauflösung von kleiner/gleich 10 msec, vorzugsweise von kleiner/gleich 1 msec, vorzugsweise von kleiner/gleich 1 µsec erzeugt werden; und dass eine Übermittlungseinheit (5, 5',6, 6', 7, 7', 9) bereitgestellt wird, von welcher Übermittlungseinheit (5, 5',6, 6', 7, 7', 9) die Lastdaten (LD1 - LD3) des Verkehrssensors (1 - 1") und die Strukturdaten (SD1 - SD4) des Struktursensors (2 - 2‴) synchronisiert mit einer Systemgenauigkeit von kleiner/gleich 10 msec, vorzugsweise von kleiner/gleich 1 msec, vorzugsweise von kleiner/gleich 1 µsec zur Auswerteeinheit (10) übermittelt werden.

4. Verfahren gemäss einem der Ansprüche 2 oder 3, **dadurch gekennzeichnet, dass** die Lastdaten (LD1 - LD3) und die Strukturdaten (SD1 - SD4) Beträge (XS, S, L, XL) aufweisen, welche Auswerteeinheit (10) eingerichtet ist, im Zustandsprofil (P) die Beträge (XS, S, L, XL) der Lastdaten (LD1 - LD3) zu Zeitpunkten (t1 - t4) der Erzeugung der Lastdaten (LD1 - LD3) mit den Beträgen (XS, S, L, XL) der Strukturdaten (SD1 - SD4) zu Zeitpunkten (t1 - t4) der Erzeugung der Strukturdaten (SD1 - SD4) zu verknüpfen.

5. Verfahren gemäss Anspruch 4, **dadurch gekennzeichnet, dass** die Fahrzeuge (C, C') auf mindestens eine Fahrbahn (LA, LA', LB) mit mehrere Fahrspuren (LA1 - LA3, LA1' - LA3', LB1 - LB3) in eine Fahrtrichtung fahren, von welchem Verkehrssensor (1 - 1") in jeder Fahrspur (LA1 - LA3, LA1' - LA3', LB1 - LB3) für die Last der Fahrzeuge (C, C') Lastdaten (LD1 - LD3) mit einer Ortsauflösung von einigen Zentimetern in einem von Null verschiedenen Winkel bezüglich der Fahrtrichtung erfasst werden, welche Lastdaten (LD1 - LD3) mindestens eine der folgenden Verkehrsinformationen enthalten: eine Last eines einzelnen Rades eines Fahrzeugs (C, C'), eine Position eines jeden Rades eines Fahrzeugs (C, C') in mindestens einer Fahrspur (LA1 - LA3, LA1' - LA3', LB1 - LB3), eine Last einer Achse eines Fahrzeugs (C, C'), eine Last eines Fahrzeugs (C, C'), eine Länge eines Fahrzeugs (C, C').

6. Verfahren gemäss Anspruch 4, **dadurch gekennzeichnet, dass** die Fahrzeuge (C, C') auf mindestens eine Fahrbahn (LA, LA', LB) mit mehrere Fahrspuren (LA1 - LA3, LA1' - LA3', LB1 - LB3) in eine Fahrtrichtung fahren" welcher Verkehrssensor (1 - 1") in jeder Fahrspur (LA1 - LA3, LA1' - LA3') mindestens einen A-Sensor (1.1 - 1.1'') und mindestens einen B-Sensor (1.2 - 1.2") aufweist, von welchem A-Sensor (1.1 - 1.1'') für die Last der Fahrzeuge (C, C') Lastdaten (LD1 - LD3) erzeugt werden und von welchem B-Sensor (1.2 - 1.2") für die Last der Fahrzeuge (C, C') Lastdaten (LD1 - LD3) erzeugt werden, welche Lastdaten (LD1 - LD3) Beträge (XS, S, L, XL) aufweisen.

7. Verfahren gemäss Anspruch 6, **dadurch gekennzeichnet, dass** der A-Sensor (1.1 - 1.1'') und der B-Sensor (1.2 - 1.2") in einem ersten Sensorabstand (d1) zueinander angeordnet sind, welche Auswerteeinheit (10) eingerichtet ist, die die Beträge (XS, S, L, XL) der Lastdaten (LD1 - LD3) des A-Sensors (1.1 - 1.1") mit den Beträgen (XS, S, L, XL) der Lastdaten (LD1 - LD3) des B-Sensors (1.2 - 1.2") zu vergleichen; dass die Auswerteeinheit (10) eingerichtet ist, für die Beträge (XS, S, L, XL) der Lastdaten (LD1 - LD3) des A-Sensors (1.1 - 1.1''), welche im Rahmen einer Erfassungsgenauigkeit gleich gross wie die Beträge (XS, S, L, XL) der Lastdaten (LD1, LD2) des B-Sensors (1,2 - 1.2") sind, eine Zeitdauer (t) zwischen den Zeitpunkten (t1 - t4) der Erzeugung dieser Lastdaten (LD1 - LD3) des A-Sensors (1.1 - 1.1'') und des B-Sensors (1.2 - 1.2") mit im Rahmen der Erfassungsgenauigkeit gleich grossen Beträgen (XS, S, L, XL) zu ermitteln; und dass die Auswerteeinheit (10) eingerichtet ist, den ersten Sensorabstand (d1) durch die Zeitdauer (t) zu dividieren, und so eine Geschwindigkeit (V) des Fahrzeugs (C, C'), dessen Last als Lastdaten (LD1 - LD3) erfasst worden ist, zu ermitteln.

8. Verfahren gemäss einem der Ansprüche 6 oder 7, **dadurch gekennzeichnet, dass** mindestens ein weiterer Verkehrssensor (3 - 3ʺʺ) bereitgestellt wird, welcher weitere Verkehrssensor (3 - 3ʺʺ) ein Geschwindigkeitssensor zur Erfassung der Geschwindigkeit (V) eines der Fahrzeuge (C, C') ist; dass vom Verkehrssensor (1 - 1") für eine erfasste Last eines der Fahrzeuge (C, C') neben den Lastdaten (LD1 - LD3) auch mindestens ein Steuersignal (SS - SS'') erzeugt wird; dass vom weiteren Verkehrssensor (3 - 3'''') für das Steuersignal (SS - SS'') die Geschwindigkeit (V) des Fahrzeugs (C, C'), dessen Last als Lastdaten (LD1 - LD3) erfasst worden ist, erfasst wird; und dass vom weiteren Verkehrssensor (3 - 3'''') für die erfasste Geschwindigkeit (V) des Fahrzeugs (C, C') weitere Daten (TD1 - AD5) erzeugt werden.

9. Verfahren gemäss einem der Ansprüche 6 oder 7, **dadurch gekennzeichnet, dass** mindestens ein weiterer Verkehrssensor (3 - 3ʺʺ) bereitgestellt wird, welcher weitere Verkehrssensor (3 - 3'''') ein Bildsensor zur Erfassung des Nummernschilds eines der Fahrzeuge (C, C') ist; dass vom Verkehrssensor (1 - 1") für eine erfasste Last eines der Fahrzeuge (C, C') neben den Lastdaten (LD1 - LD3) auch mindestens ein Steuersignal (SS - SS") erzeugt wird; dass vom weiteren Verkehrssensor (3 - 3ʺʺ) für das Steuersignal (SS - SS") das Nummernschild des Fahrzeugs (C, C'), dessen Last als Lastdaten (LD1 - LD3) erfasst worden ist, erfasst wird; und dass vom weiteren Verkehrssensor (3 - 3ʺʺ) für das erfasste Nummernschild des Fahrzeugs (C, C') weitere Daten (TD1 - AD5) erzeugt werden.

10. Verfahren gemäss einem der Ansprüche 5 bis 9, **dadurch gekennzeichnet, dass** mindestens ein weiterer Verkehrssensor (3 - 3ʺʺ) zur Erfassung mindestens einer der folgenden Verkehrsinformationen bereitgestellt wird: eine Präsenz eines der Fahrzeuge (C, C'), ein Bild eines der Fahrzeuge (C, C'), ein Nummernschild eines der Fahrzeuge (C, C'), eine Fahrspur (LA1 - LA3, LA1' - LA3', LB1 - LB3) eines der Fahrzeuge (C, C'); von welchem weiteren Verkehrssensor (3 - 3ʺʺ) für die erfasste Verkehrsinformation weitere Verkehrsdaten (TD1 - TD5) erzeugt werden; dass vom weiteren Verkehrssensor (1 - 1") die weiteren Verkehrsdaten (TD1 - TD5) zu Zeitpunkten (t1 - t4) erzeugt werden; und dass die Auswerteeinheit (10) eingerichtet ist, die weiteren Verkehrsdaten (TD1 - TD5) in der Reihenfolge der Zeitpunkte (t1 - t4) der Erzeugung der weiteren Verkehrsdaten (TD1 - TD5) darzustellen.

11. Verfahren gemäss Anspruch 10, **dadurch gekennzeichnet, dass** die Auswerteeinheit (10) eingerichtet ist, in den Verkehrsdaten (TD1 - TD5) die Verkehrsinformation zu erkennen; dass die Auswerteeinheit (10) ist eingerichtet, die Fahrt des Fahrzeugs (C, C') in der Reihenfolge der Zeitpunkte (t1 - t4) der in den Verkehrsdaten (TD1 - TD5) erkannten Verkehrsinformation darzustellen; und dass die Auswerteeinheit (10) eingerichtet ist, ein Wechsel der Fahrspur (LA1 - LA3, LA1' - LA3', LB1 - LB3) bei der Fahrt eines der Fahrzeuge (C, C') in der Reihenfolge der Zeitpunkte (t1 - t4) der in den Verkehrsdaten (TD1 - TD5) erkannten Fahrspur (LA1 - LA3, LA1' - LA3', LB1 - LB3) dieses Fahrzeugs (C, C') darzustellen.

12. Verfahren gemäss Anspruch 10, **dadurch gekennzeichnet, dass** die Auswerteeinheit (10) eingerichtet ist, in den Verkehrsdaten (TD1 - TD5) die Verkehrsinformation zu erkennen; dass die Auswerteeinheit (10) ist eingerichtet, die Fahrt des Fahrzeugs (C, C') in der Reihenfolge der Zeitpunkte (t1 - t4) der in den Verkehrsdaten (TD1 - TD5) erkannten Verkehrsinformation darzustellen; und dass die Auswerteeinheit (10) eingerichtet ist, eine Änderung der Geschwindigkeit (V) eines Fahrzeugs (C, C') bei der Fahrt des Fahrzeugs (C, C') in der Reihenfolge der Zeitpunkte (t1 - t4) des in den Verkehrsdaten (TD1 - TD5) erkannten Bilds des Fahrzeugs (C, C') oder des in den Verkehrsdaten (TD1 - TD5) erkannten Nummernschilds des Fahrzeugs (C, C') darzustellen.

13. Verfahren gemäss einem der Ansprüche 7 oder 8, **dadurch gekennzeichnet, dass** der Verkehrssensor (1 - 1") und der Struktursensor (2 - 2‴) in einem Sensorabstand (d2 - d2‴, d3 - d3‴) zueinander angeordnet sind, welche Auswerteeinheit (10) eingerichtet ist, den Sensorabstand (d2 - d2‴, d3 - d3''') durch die Geschwindigkeit (V) des Fahrzeugs (C, C'), dessen Last als Lastdaten (LD1 - LD3) erfasst worden ist, zu dividieren und so eine Fahrzeit (TT) zu ermitteln; und dass die Auswerteeinheit (10) eingerichtet ist, den Zeitpunkt (t1 - t4) der Erzeugung der Lastdaten (LD1 - LD3) zur Fahrzeit (TT) zu addieren, und so den Zeitpunkt (t1 - t4) zu ermitteln, an dem sich das Fahrzeug (C, C') über dem Struktursensor (2 - 2''') befindet.

14. Verfahren gemäss einem der Ansprüche 7 oder 8, **dadurch gekennzeichnet, dass** die Auswerteeinheit (10) eingerichtet ist, für die Zeitpunkte (t1 - t4) der Erzeugung von Lastdaten (LD1 - LD3) durch den Verkehrssensor (1 - 1") eine Auffahrtenzahl (X) zu ermitteln; dass die Brücke (B) eine bekannte Länge (d) aufweist; dass die Auswerteeinheit (10) eingerichtet ist, die Länge (d) durch die Geschwindigkeit (V) des Fahrzeugs (C, C'), dessen Last als Lastdaten (LD1 - LD3) erfasst worden ist, zu dividieren und so eine Aufenthaltszeit (PT) dieses Fahrzeugs (C, C') auf der Brücke (B) zu ermitteln; und dass die Auswerteeinheit (10) eingerichtet ist, die Auffahrtenzahl (X) durch die Aufenthaltszeit (PT) zu dividieren und so eine Fahrzeugzahl (N) auf der Brücke (B) zu ermitteln.

15. Verfahren gemäss einem der Ansprüche 1 bis 14, **dadurch gekennzeichnet, dass** mindestens eine Erfassungseinheit (8) bereitgestellt wird, welche Erfassungseinheit (8) räumlich nahe bei der Brücke (B) angeordnet ist, von welcher Erfassungseinheit (8) die Lastdaten (LD1 - LD3) und die Strukturdaten (SD1 - SD4) erfasst werden; dass die Auswerteeinheit (10) räumlich entfernt von der Brücke (B) angeordnet ist und mindestens ein entferntes Netzwerk (9) bereitgestellt wird, von welchem entfernten Netzwerk (9) die Lastdaten (LD1 - LD3) und die Strukturdaten (SD1 - SD4) von der Erfassungseinheit (8) zur Auswerteeinheit (10) übermittelt werden; und dass die Auswerteeinheit (10) eingerichtet ist, eine Bandbreite (BW) des weiteren Netzwerks (9) einzustellen, welche Bandbreite (BW) mindestens einen der folgenden Betriebsmodi umfasst: normal oder hoch, und im normalen Betriebsmodus der Bandbreite (BW) ein Informationsgehalt der übermittelten Lastdaten (LD1 - LD3) und Strukturdaten (SD1 - SD4) mindestens zehnmal geringer als im hohen Betriebsmodus der Bandbreite (BW) ist.

16. Vorrichtung (D) zur Ermittlung des Zustandes einer Brücke (B); mit mindestens einem Verkehrssensor (1 - 1") zur Erfassung der Last von über die Brücke (B) fahrenden Fahrzeugen (C, C'), welcher Verkehrssensor (1 - 1") für die erfasste Last Lastdaten (LD1 - LD3) erzeugt; und mit einer Auswerteeinheit (10) zur Auswertung der Lastdaten (LD1 - LD3); **dadurch gekennzeichnet, dass** die Vorrichtung (D) mindestens einen Struktursensor (2 - 2‴) zur Erfassung einer Strukturantwort der Brücke (B) aufweist, welche Strukturantwort mindestens eine der folgenden physikalischen Grössen umfasst: eine Vibration, eine Dehnung, eine Verschiebung oder eine Neigungsänderung, welcher Struktursensor (2 - 2‴) für die erfasste Strukturantwort Strukturdaten (SD1 - SD4) erzeugt; und dass die Auswerteeinheit (10) eingerichtet ist, die Lastdaten (LD1 - LD3) und die Strukturdaten (SD1 - SD4) zu einem Zustandsprofil (P) der Brücke (B) zu verknüpfen, welches Zustandsprofil (P) die zeitliche Entwicklung der Last der Fahrzeuge (C, C') und der Strukturantwort der Brücke (B) darstellt.

17. Vorrichtung (D) gemäss Anspruch 16, **dadurch gekennzeichnet, dass** die Brücke (B) mehrere Zufahrten (A1, A2) aufweist, welche Zufahrten (A1, A2) ausserhalb der Brücke (B) auf einem Untergrund (U, U') angeordnet sind und mindestens eine Fahrbahn (LA, LA') für die Fahrzeuge (C, C') aufweisen; dass die Brücke (B) eine Struktur (T) aufweist, welche Struktur (T) bereichsweise schwingend gestaltet ist; dass bei der Fahrt der Fahrzeuge (C, C') Rollkräfte auftreten, welche sich als Schwingungen in Fahrtrichtung und entgegen der Fahrtrichtung in der Struktur (T) und im Untergrund (U, U') ausbreiten, welche Rollkräfte sich mit der Erfassung der Last der Fahrzeuge (C, C') durch den Verkehrssensor (1 - 1'') überlagern und die Erfassung der Last der Fahrzeuge (C, C') durch den Verkehrssensor (1 - 1") verfälschen; dass der Verkehrssensor (1 - 1") ein WIM Sensor (1 - 1"), vorzugsweise ein piezoelektrischer WIM Sensor 1 - 1") ist; dass der Untergrund (U, U') die Rollkräfte um mindestens eine Grössenordnung stärker dämpft als die schwingend gestaltete Struktur (T); und dass der Verkehrssensor (1 - 1") in der Fahrbahn (LA, LA') der Zufahrten (A1, A2) eingebaut ist.

18. Vorrichtung (D) gemäss Anspruch 16, **dadurch gekennzeichnet, dass** die Brücke (B) eine Struktur (T) aufweist, welche Struktur (T) bereichsweise massiv gestaltet und bereichsweise schwingend gestaltet ist; dass bei der Fahrt der Fahrzeuge (C, C') Rollkräfte auftreten, welche sich als Schwingungen in Fahrtrichtung und entgegen der Fahrtrichtung in der Struktur (T) und im Untergrund (U, U') ausbreiten, welche Rollkräfte sich mit der Erfassung der Last der Fahrzeuge (C, C') durch den Verkehrssensor (1 - 1") überlagern und die Erfassung der Last der Fahrzeuge (C, C') durch den Verkehrssensor (1 - 1") verfälschen; dass der Verkehrssensor (1 - 1") ein WIM Sensor (1 - 1"), vorzugsweise ein piezoelektrischer WIM Sensor 1 - 1") ist; dass der massiv gestaltete Bereich der Struktur (T) die Rollkräfte um mindestens eine Grössenordnung stärker dämpft als der schwingend gestaltete Bereich der Struktur (T); und dass der Verkehrssensor (1 - 1") in der Fahrbahn (LA, LA') im Bereich der massiv gestalteten Struktur (T) eingebaut ist.

19. Vorrichtung (D) gemäss einem der Ansprüche 16 bis 18, **dadurch gekennzeichnet, dass** die Vorrichtung (D) mindestens einen Feldbus (5, 5') und mindestens eine Aufbereitereinheit (6, 6') aufweist; dass der Feldbus (5, 5') den Struktursensor (2 - 2‴) elektrisch mit der Aufbereitereinheit (6, 6') verbindet; dass der Feldbus (5, 5') die Strukturdaten (SD1 - SD4) gemäss einem Protokoll vom Struktursensor (2 - 2‴) zur Aufbereitereinheit (6, 6') übermittelt; und dass der Feldbus (5, 5') den Struktursensor (2 - 2''') und die Aufbereitereinheit (6, 6') mit einer Systemzeit mit einer Systemgenauigkeit von kleiner/gleich 10 msec, vorzugsweise von kleiner/gleich 1 msec, vorzugsweise von kleiner/gleich 1 µsec synchronisiert.

20. Vorrichtung (D) gemäss Anspruch 19, **dadurch gekennzeichnet, dass** die Struktursensor (2 - 2‴) vom der Feldbus (5, 5') mit elektrischer Energie versorgt werden.

21. Vorrichtung (D) gemäss einem der Ansprüche 19 oder 20, **dadurch gekennzeichnet, dass** die Vorrichtung (D) mindestens ein nahes Netzwerk (7, 7) und eine Erfassungseinheit (8, 8') aufweist; dass die Erfassungseinheit (8) räumlich nahe bei der Brücke (B) angeordnet ist; dass das nahe Netzwerk (7, 7') den Verkehrssensor (1 - 1") und die Aufbereitungseinheit (6, 6') elektrisch mit der Erfassungseinheit (8, 8') verbindet; dass das nahe Netzwerk (7, 7') die Lastdaten (LD1 - LD3) gemäss einem Protokoll vom Verkehrssensor (1, 1') zur Erfassungseinheit (8, 8') übermittelt; dass das nahe Netzwerk (7, 7') die Strukturdaten (SD1 - SD4) gemäss einem Protokoll vom Struktursensor (2 - 2‴) zur Erfassungseinheit (8, 8') übermittelt; und dass das nahe Netzwerk (7, 7') den Verkehrssensor (1 - 1'') und die Erfassungseinheit (8, 8') mit einer Systemzeit von kleiner/gleich 10 msec, vorzugsweise von kleiner/gleich 1 msec, vorzugsweise von kleiner/gleich 1 µsec synchronisiert.
